# EUROPEAN PATENT APPLICATION

(11) **EP 1 786 129 A1**
(43) Date of publication of application: **16.05.2007**
(21) Application number: 05782327.0
(22) Date of filing: 09.09.2005
(51) Int. Cl.: H04J 11/00

(54) **WIRELESS COMMUNICATION APPARATUS AND WIRELESS COMMUNICATION METHOD**

(30) Priority: 10.09.2004 JP 2004264606; 26.08.2005 JP 2005246088
(71) Applicant: MATSUSHITA ELECTRIC INDUSTRIAL CO., LTD., Osaka 571-8501 (JP)
(72) Inventor: IMAMURA, Daichi., Matsushita Electric Ind.Co.Ltd, Osaka 540-6319 (JP); NISHIO, Akihiko., Matsushita Electric Ind.Co.Ltd, Osaka 540-6319 (JP)
(74) Representative: Grünecker, Kinkeldey, Stockmair & Schwanhäusser Anwaltssozietät
(86) International application number: PCT/JP2005/016606
(87) International publication number: WO 2006/028204

(57) **Abstract**

A wireless communication apparatus wherein the data amount of feedback information can be reduced, while a high throughput being maintained. In this apparatus, a CSI (Channel State Information) processing part (38) generates a CSI frame based on an SNR (Signal power to Noise power Ratio) for each of measured subcarriers, and a CSI transmission control part (39) generates a timing signal and control information required for generating the CSI frame, and controls the CSI processing part (38). The CSI processing part (38) generates a first frame (CSI1), which comprises the CSI of a subcarrier whose SNR variation amount is less than a threshold value, in a generation period that is greater than the generation period of a second frame (CSI2) comprising the CSI of a subcarrier whose SNR variation amount is equal to or greater than the threshold value.

## Description

### Technical Field

The present invention relates to a radio communication apparatus and radio communication method.

### Background Art

In a fourth-generation or suchlike next-generation mobile communication systems, a data rate in excess of 100 Mbps is required even when moving at high speed. To meet this requirement, various kinds of radio communication using a bandwidth on the order of 100 MHz have been studied. Among these, a multicarrier transmission method represented by OFDM (Orthogonal Frequency Division Multiplexing) is considered to be particularly promising as a transmission method for next-generation mobile communication systems from the standpoints of adaptability to frequency selective fading environments and efficiency of frequency utilization.

Heretofore, in order to achieve high throughput in a communication system that uses a multicarrier transmission method such as OFDM, a technology has been studied whereby the channel state per subcarrier, or per segment comprising a plurality of subcarriers, is estimated using a pilot signal or the like, and modulation parameters such as error correction capability, modulation M-ary value, power, phase, transmitting antenna, and so forth, are determined and transmitted for each subcarrier (segment) according to information indicating that channel state (Channel State Information: CSI).

For example, when modulation parameters are controlled on a subcarrier-by-subcarrier basis (segment-by-segment basis), per-subcarrier (per-segment) CSI, modulation parameters, or suchlike feedback information is transmitted. Therefore, the greater the number of subcarriers (segments), the larger is the amount of data necessary for that feedback, and the greater the feedback information overhead.

Also, channel state are subject to time variation in line with the movement of a mobile station or peripheral objects. The amount of such time variation is proportional to the mobility and carrier frequency. As the amount of time variation of channel state increases, the channel state error between a point in time at which the channel state is estimated and a point in time at which transmission is performed according to modulation parameters determined based on feedback information increases, and consequently reception performance degrades and throughput falls. To reduce degradation of reception performance, it is necessary for the CSI feedback period (that is, the frequency with which CSI is reported) to be decreased as the amount of time variation of channel state increases. Therefore, the higher the mobility of a mobile station, the larger is the amount of transmitted feedback information.

As a technology for reducing the amount of transmitted feedback information, there is a technique whereby the mobility of a mobile station that controls modulation parameters on a subcarrier-by-subcarrier (segment-by-segment) basis is limited to low speed (for example, 3 km/h), and for a mobile station moving at a higher speed is switched to common control for all subcarriers instead of per-subcarrier (per-segment) control (see Non-patent Document 1, for example).

There are also technologies whereby, for a mobile station moving at less than a maximum mobility, the amount of transmitted feedback information is reduced by transmitting CSI using a period that is an integral multiple of the minimum feedback period (see Non-patent Documents 2 and 3, for example). In Non-patent Documents 2 and 3, feedback information transmitted at each timing always contains CSI of all subcarriers (segments).
Non-patent Document 1: Brian Classon, Philippe Sartori, Vijay Nangia, Xiangyang Zhuang, Kevin Baum, "Multi-dimensional Adaptation and Multi-user Scheduling Techniques for Wireless OFDM Systems", IEEE International Conference on Communications 2003 (ICC2003), Volume3, pp.2251- pp.2255, 11-15 May, 2003
Non-patent Document 2: Yoshitaka HARA, Takashi KAWABATA, Jinsong DUAN, Takashi SEKIGUCHI "MC-CDM System for Packet Communications Using Frequency Scheduling", RCS2002-129, IEICE, July 2002
Non-patent Document 3: "3GPP TSGRAN High Speed Downlink Packet Access; Physical Layer Aspects (Release 5)", 3GPP TR25.858 v5.0.0, March 2002.

### Disclosure of Invention

### Problems to be Solved by the Invention

However, with the above conventional technologies, although the amount of the CSI data fed back by a mobile station moving at less than the maximum mobility is reduced, the amount of the CSI data fed back by a mobile station moving at the maximum mobility is not reduced. Therefore, the amount of the CSI data fed back increases when there are many mobile stations with a high mobility, for example.

It is an object of the present invention to provide a radio communication apparatus and radio communication method that enable the amount of data in feedback information to be reduced while maintaining high throughput.

### Means for Solving the Problems

A radio communication apparatus of the present invention employs a configuration that includes: a receiving section that receives a multicarrier signal composed of a plurality of subcarriers; a measuring section that measures the quality level per subcarrier or per segment of the multicarrier signal; a comparison section that compares the quality level or an amount of variation of the quality level with a threshold value; and a transmitting section that transmits CSI or modulation parameters of some subcarriers or some segments for which the quality level is less than the threshold value, or of some subcarriers or some segments for which the amount of variation exceeds the threshold value, using a first feedback period, and transmits CSI or modulation parameters of all subcarriers or all segments using a second feedback period greater than the first feedback period.

### Advantageous Effect of the Invention

The present invention enables the amount of data in feedback information to be reduced while maintaining high throughput.

### Brief Description of Drawings

FIG.1 is a block diagram showing the configuration of a radio communication apparatus (CSI receiving apparatus) according to Embodiment 1 of the present invention;
FIG.2 is a block diagram showing the configuration of a radio communication apparatus (CSI transmitting apparatus) according to Embodiment 1 of the present invention;
FIG.3 is a block diagram showing the configuration of a CSI processing section according to Embodiment 1 of the present invention;
FIG.4 is a block diagram showing the configuration of an instantaneous variation measuring section according to Embodiment 1 of the present invention;

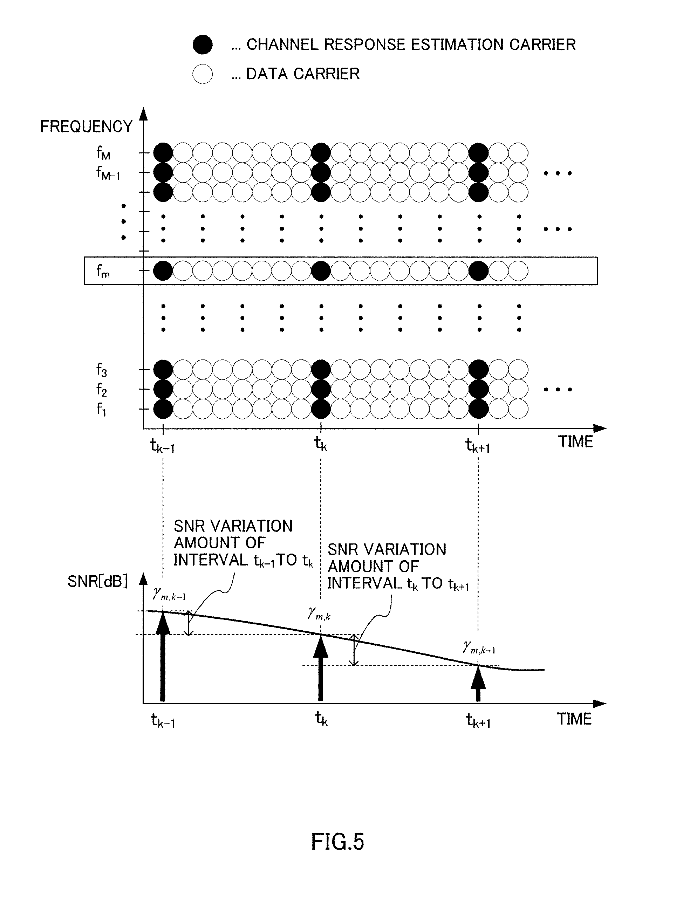

FIG.5 is a drawing showing the carrier configuration of OFDM symbols according to Embodiment 1 of the present invention;
FIG.6 is a drawing showing the relationship between the SNR variation amount and a threshold value according to Embodiment 1 of the present invention;
FIG.7 is a drawing showing comparison results according to Embodiment 1 of the present invention;
FIG.8 is a drawing showing the operation of a radio communication apparatus (CSI transmitting apparatus) according to Embodiment 1 of the present invention;
FIG.9 is a drawing showing a frame format according to Embodiment 1 of the present invention;
FIG.10 is a drawing showing a frame format according to Embodiment 1 of the present invention;
FIG.11 is a drawing showing a frame format according to Embodiment 1 of the present invention;
FIG.12 is a block diagram showing the configuration of a CSI processing section according to Embodiment 1 of the present invention;
FIG.13 is a drawing showing the operation of a radio communication apparatus (CSI receiving apparatus) according to Embodiment 1 of the present invention;
FIG.14 is a drawing showing the state of channel state memory according to Embodiment 1 of the present invention;
FIG.15 is a drawing showing the operation of a radio communication apparatus (CSI transmitting apparatus) according to Embodiment 2 of the present invention;
FIG.16 is a drawing showing a frame format according to Embodiment 2 of the present invention;
FIG.17 is a drawing showing a frame format according to Embodiment 2 of the present invention;
FIG.18 is a drawing showing a frame format according to Embodiment 2 of the present invention;
FIG.19 is a block diagram showing the configuration of a CSI processing section according to Embodiment 2 of the present invention;
FIG.20 is a drawing showing the operation of a radio communication apparatus (CSI receiving apparatus) according to Embodiment 2 of the present invention;
FIG.21 is a graph showing SNR normalized cumulative probability distribution according to Embodiment 3 of the present invention;
FIG. 22 is a drawing showing the relationship between the SNR and a threshold value according to Embodiment 3 of the present invention;
FIG.23 is a block diagram showing the configuration of a CSI processing section according to Embodiment 3 of the present invention;
FIG.24 is a block diagram showing the configuration of a threshold value calculation section according to Embodiment 3 of the present invention;
FIG.25 is an operation flowchart of a radio communication apparatus (CSI transmitting apparatus) according to Embodiment 3 of the present invention;
FIG.26 is a block diagram showing the configuration of a CSI processing section according to Embodiment 3 of the present invention;

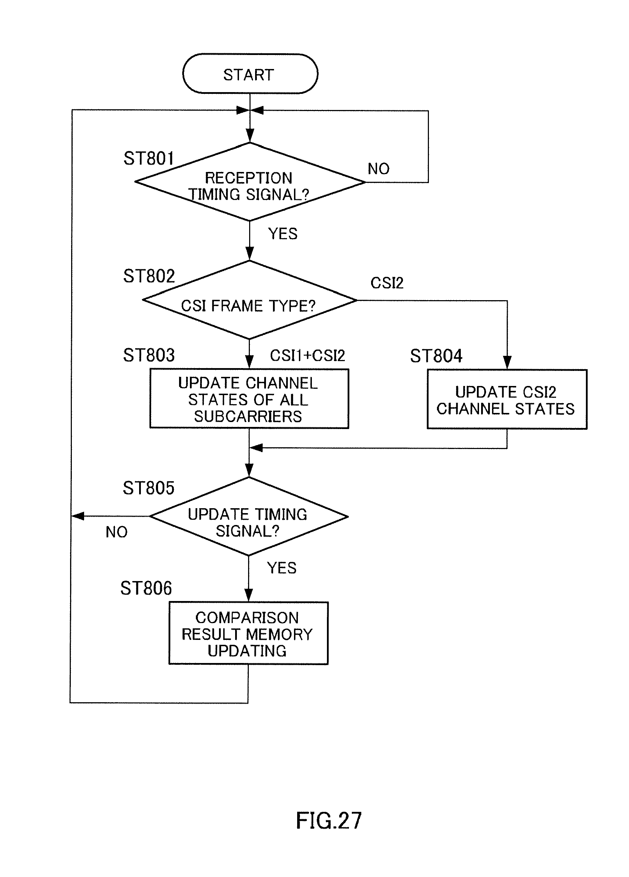

FIG.27 is an operation flowchart of a radio communication apparatus (CSI receiving apparatus) according to Embodiment 3 of the present invention;
FIG.28 is a graph showing SNR occurrence number distribution according to Embodiment 3 of the present invention;
FIG.29 is a block diagram showing the configuration of a CSI processing section according to Embodiment 4 of the present invention;
FIG. 30 is a drawing showing the relationship between SNR and classification according to Embodiment 4 of the present invention;
FIG.31 is a drawing showing classification results according to Embodiment 4 of the present invention;
FIG.32 is a drawing showing the operation of a radio communication apparatus (CSI transmitting apparatus) according to Embodiment 4 of the present invention;
FIG.33 is a drawing showing a frame format according to Embodiment 4 of the present invention;
FIG.34 is a block diagram showing the configuration of a CSI processing section according to Embodiment 4 of the present invention;
FIG.35 is a drawing showing the operation of a radio communication apparatus (CSI receiving apparatus) according to Embodiment 4 of the present invention;
FIG.36 is a drawing showing the state of channel state memory according to Embodiment 4 of the present invention;
FIG.37 is a drawing showing the state of channel state memory according to Embodiment 4 of the present invention;
FIG.38 is a drawing showing a frame format according to Embodiment 5 of the present invention;
FIG.39 is a drawing showing a frame format according to Embodiment 5 of the present invention;
FIG.40 is a drawing showing the operation of a radio communication apparatus (CSI transmitting apparatus) according to Embodiment 5 of the present invention;
FIG.41 is a block diagram showing the configuration of a CSI processing section according to Embodiment 6 of the present invention;
FIG. 42 is a drawing showing the relationship between SNR and classification according to Embodiment 6 of the present invention;
FIG.43 is a drawing showing classification results according to Embodiment 6 of the present invention;
FIG.44 is a drawing showing the operation of a radio communication apparatus (CSI transmitting apparatus) according to Embodiment 6 of the present invention;
FIG.45 is a block diagram showing the configuration of a CSI processing section according to Embodiment 6 of the present invention;
FIG.46 is a drawing showing the operation of a radio communication apparatus (CSI receiving apparatus) according to Embodiment 6 of the present invention;
FIG.47 is a block diagram showing the configuration of a CSI processing section according to Embodiment 7 of the present invention;
FIG.48 is a drawing showing an example of MCS conversion according to Embodiment 7 of the present invention;
FIG.49 is a drawing showing an example of MCS conversion according to Embodiment 7 of the present invention;
FIG.50 is a block diagram showing the configuration of a threshold value calculation section according to Embodiment 7 of the present invention;
FIG.51 is a drawing showing the operation of a radio communication apparatus (CSI transmitting apparatus) according to Embodiment 8 of the present invention;
FIG.52 is a drawing showing an example of time variation amount measurement of channel response according to Embodiment 8 of the present invention;
FIG.53 is a drawing showing an example of time variation amount measurement of channel response according to Embodiment 8 of the present invention;
FIG.54 is a block diagram showing the configuration of an SNR calculation section according to Embodiment 8 of the present invention;
FIG.55 is a drawing showing an example of control according to Embodiment 8 of the present invention;
FIG.56 is a drawing showing a frame format according to Embodiment 8 of the present invention;
FIG.57 is a drawing showing a frame format according to Embodiment 8 of the present invention; and
FIG.58 is a block diagram showing the configuration of a CSI processing section according to Embodiment 8 of the present invention.

### Best Mode for Carrying Out the Invention

Embodiments of the present invention will now be described in detail with reference to the accompanying drawings.

### (Embodiment 1)

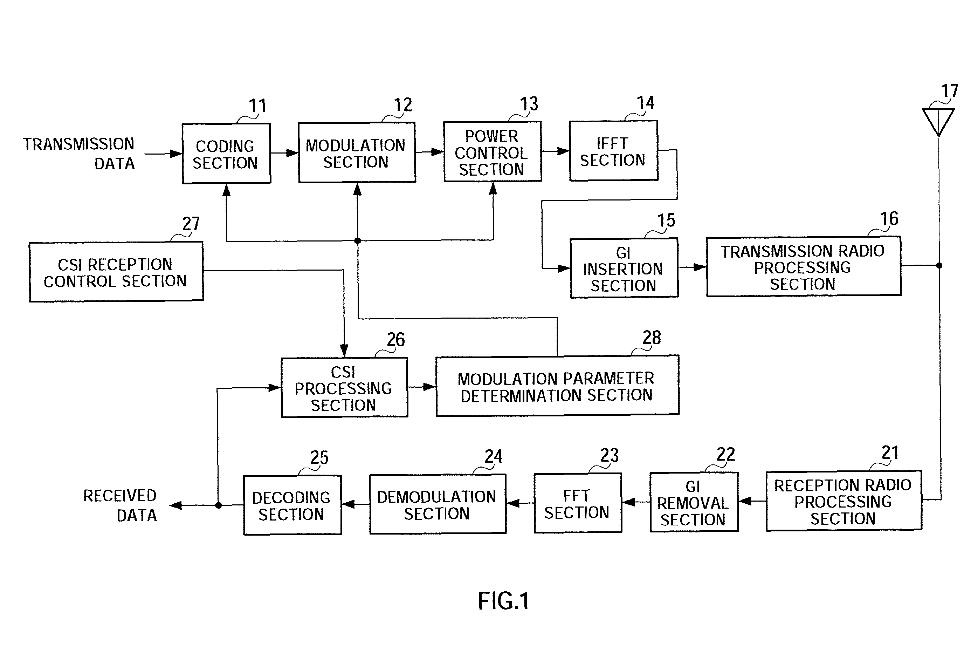

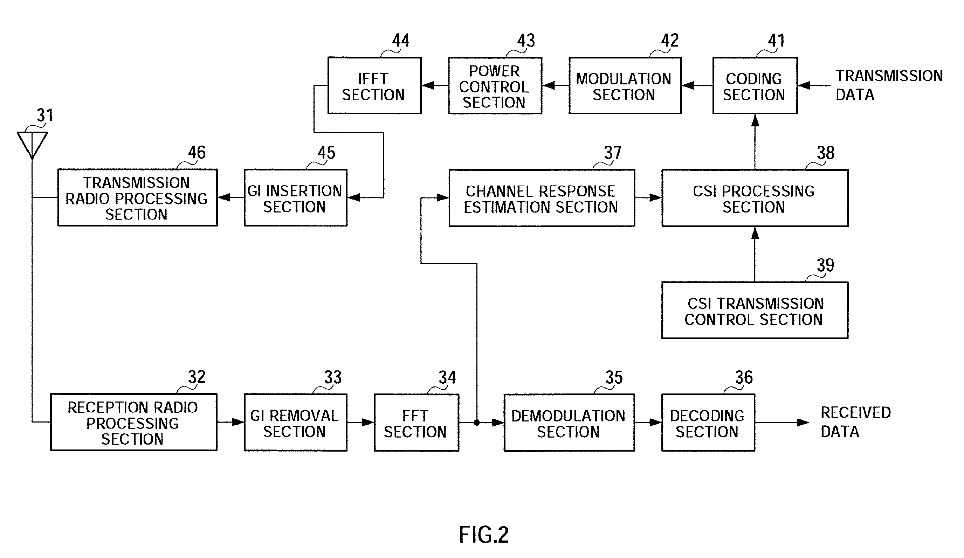

The radio communication apparatus shown in FIG.1 is a CSI receiving-side radio communication apparatus, and the radio communication apparatus shown in FIG.2 is a CSI transmitting-side radio communication apparatus. In the following description, a CSI receiving-side radio communication apparatus is referred to as a CSI receiving apparatus, and a CSI transmitting-side radio communication apparatus is referred to as a CSI transmitting apparatus. A CSI receiving apparatus transmits a multicarrier signal composed of a plurality of subcarriers to a CSI transmitting apparatus using modulation parameters (one or more of: channel coding method, channel coding rate, modulation method, transmissionpower) determined based on CSI. On the other hand, a CSI transmitting apparatus receives a multicarrier signal transmitted from a CSI receiving apparatus, and generates CSI based on a channel response value per subcarrier or per segment of the multicarrier signal. The above CSI receiving apparatus and CSI transmitting apparatus are installed in a radio communication base station apparatus and radio communication terminal apparatus used in a mobile communication system, for example.

As shown in FIG.1, a CSI receiving apparatus according to this embodiment is equipped with a coding section 11, a modulation section 12, a power control section 13, an IFFT (inverse fast Fourier transform) section 14, a GI (guard interval) insertion section 15, a transmission radio processing section 16, an antenna 17, a reception radio processing section 21, a GI removal section 22, an FFT (fast Fourier transform) section 23, a demodulation section 24, a decoding section 25, a CSI processing section 26, a CSI reception control section 27, and a modulation parameter determination section 28.

In the following description, a CSI receiving apparatus is described that sets optimal modulation parameters on a subcarrier-by-subcarrier basis or on a segment-by-segment basis based on received CSI, and transmits a multicarrier signal. A segment refers to a group in a case in which a plurality of subcarriers are divided into a plurality of groups.

Coding section 11 encodes input time-series transmission data on a subcarrier-by-subcarrier (segment-by-segment) basis using a coding method and coding rate indicated by modulation parameter determination section 28.

Modulation section 12 modulates coded transmission data on a subcarrier-by-subcarrier (segment-by-segment) basis using a modulation method (M-PSK, M-QAM, etc.) indicated by modulation parameter determination section 28.

Power control section 13 sets transmission power of each subcarrier (each segment) to a transmission power value indicated by modulation parameter determination section 28.

IFFT section 14 performs IFFT processing that multiplexes signals modulated on a subcarrier-by-subcarrier (segment-by-segment) basis using a plurality of orthogonal subcarriers, and generates an OFDM symbol that is a multicarrier signal.

GI insertion section 15 inserts a GI between OFDM symbols in order to reduce inter-symbol interference (ISI) due to delayed waves.

Transmission radio processing section 16 executes predetermined radio processing such as up-conversion on an OFDM symbol, and transmits a radio-processed OFDM symbol to the CSI transmitting apparatus from antenna 17.

Reception radio processing section 21 executes predetermined radio processing such as down-conversion on an OFDM symbol received by antenna 17. Framed CSI (a CSI frame) is included in received OFDM symbols.

GI removal section 22 removes a GI inserted between OFDM symbols.

FFT section 23 performs FFT processing on an OFDM symbol after GI removal, and obtains a per-subcarrier signal.

Demodulation section 24 demodulates a FFT-converted signal, and decoding section 25 decodes a demodulated signal. By this means, received data is obtained. Received data contains CSI frame and data frame.

CSIprocessingsection26obtainsper-subcarrier (per-segment) CSI from a CSI frame. The classification and processing timing of a processed CSI frame is in accordance with CSI reception control section 27 control. Details of CSI processing section 26 will be given later herein.

CSI reception control section 27 generates control information and a timing signal necessary for CSI frame processing and CSI updating, and controls CSI processing section 26.

Modulation parameter determination section 28 determines a per-subcarrier (per-segment) coding rate, modulation method, and transmission power based on per-subcarrier (per-segment) CSI input from CSI processing section 26.

Next, a CSI transmitting apparatus will be described. As shown in FIG.2, a CSI transmitting apparatus according to this embodiment is equipped with an antenna 31, a reception radio processing section 32, a GI removal section 33, an FFT section 34, a demodulation section 35, a decoding section 36, channel response estimation section 37, a CSI processing section 38, a CSI transmission control section 39, a coding section 41, a modulation section 42, a power control section 43, an IFFT section 44, a GI insertion section 45, and a transmission radio processing section 46.

Reception radio processing section 32 executes predetermined radio processing such as down-conversion on an OFDM symbol received by antenna 31.

GI removal section 33 removes a GI inserted between OFDM symbols.

FFT section 34 performs FFT processing on an OFDM symbol after GI removal, and obtains a per-subcarrier signal.

An information signal in which a pilot signal or the like has been removed from a FFT-converted signal is input to demodulation section 35. Demodulation section 35 demodulates the information signal using a demodulation method corresponding to the modulation method used in modulation by the CSI receiving apparatus.

Decoding section 36 performs error correction and suchlike decoding processing on a modulated signal using a decoding method corresponding to the coding method used in coding by the CSI receiving apparatus, and obtains received data.

Within a FFT-converted signal, a signal necessary for channel response estimation, such as a pilot signal, is input to channel response estimation section 37. Channel response estimation section 37 estimates a per-subcarrier (per-segment) channel response value.

CSI processing section 38 finds per-subcarrier (per-segment) CSI based on an estimated channel response value, and generates a CSI frame for feeding back those CSI items to the CSI receiving apparatus. The classification and generation timing of a generated CSI frame is in accordance with control of CSI transmission control section 39. Details of CSI processing section 38 will be given later herein.

CSI transmission control section 39 generates control information and a timing signal necessary for CSI frame generation, and controls CSI processing section 38.

Coding section 41 encodes input time-series transmission data and CSI frames on a subcarrier-by-subcarrier (segment-by-segment) basis using a predetermined coding method and coding rate.

Modulation section 42 modulates coded transmission data and CSI frames on a subcarrier-by-subcarrier (segment-by-segment) basis using a predetermined modulation method.

Power control section 43 controls per-subcarrier (per-segment) transmission power.

IFFT section 44 performs IFFT processing that multiplexes signals modulated on a subcarrier-by-subcarrier (segment-by-segment) basis using a plurality of orthogonal subcarriers, and generates an OFDM symbol that is a multicarrier signal.

GI insertion section 45 inserts a GI between OFDM symbols in order to reduce ISI due to delayed waves.

Transmission radio processing section 46 executes predetermined radio processing such as up-conversion on an OFDM symbol, and transmits a radio-processed OFDM symbol to the CSI receiving apparatus from antenna 31.

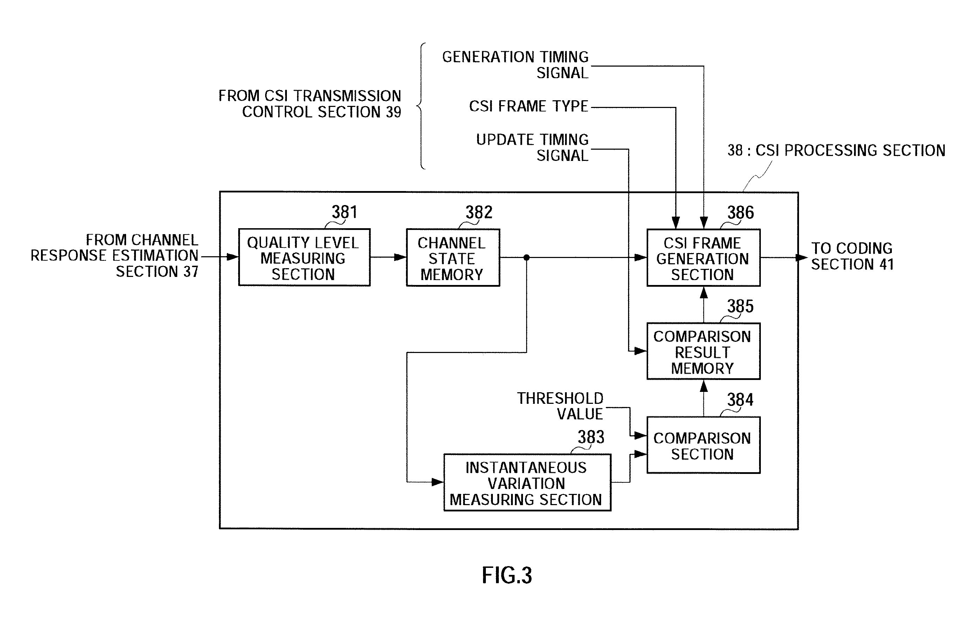

Next, CSI processing section 38 of the CSI transmitting apparatus shown in FIG.2 will be described in detail using FIG.3. As shown in FIG.3, CSI processing section 38 is equipped with a quality level measuring section 381, channel state memory 382, an instantaneous variation measuring section 383, a comparison section 384, comparison result memory 385, and a CSI frame generation section 386.

Quality level measuring section 381 measures the per-subcarrier (per-segment) SNR (Signal to Noise Ratio) from a per-subcarrier channel response value input from channel response estimation section 37 as a value indicating the channel state. Although SNR is used here as a quality level, it is also possible to use the CNR (Carrier to Noise power Ratio), received power, reception amplitude, or the like, as a quality level. Also, in a communication system in which not only noise power but also interference power is important as CSI, such as a cellular system, it is also possible to use the SIR (Signal to Interference Ratio), CIR (Carrier to Interference Ratio), SINR (Signal to Interference and Noise Ratio), CINR (Carrier to Interference and Noise Ratio), or the like as a quality level.

Channel state memory 382 holds per-subcarrier (per-segment) SNR values measured by quality level measuring section 381.

Instantaneous variation measuring section 383 measures an SNR instantaneous time variation amount (SNR variation amount) on a subcarrier-by-subcarrier (segment-by-segment) basis from SNR values held in channel state memory 382. Details of instantaneous variation measuring section 383 will be given later herein.

Comparison section 384 compares a per-subcarrier (per-segment) SNR variation amount with a threshold value. It is also possible for the threshold value to be changed adaptively according to the average SNR or Doppler frequency.

Comparison result memory 385 stores and holds comparison section 384 comparison results on a subcarrier-by-subcarrier (segment-by-segment) basis. Comparison result memory 385 stored contents are updated in accordance with an update timing signal input from CSI transmission control section 39.

CSI frame generation section 386 generates a CSI frame in accordance with a CSI frame type and generation timing signal input from CSI transmission control section 39. CSI frame generation section 386 generates a CSI frame according to the CSI frame type and comparison result memory 385 stored contents at the timing at which a generation timing signal is input.

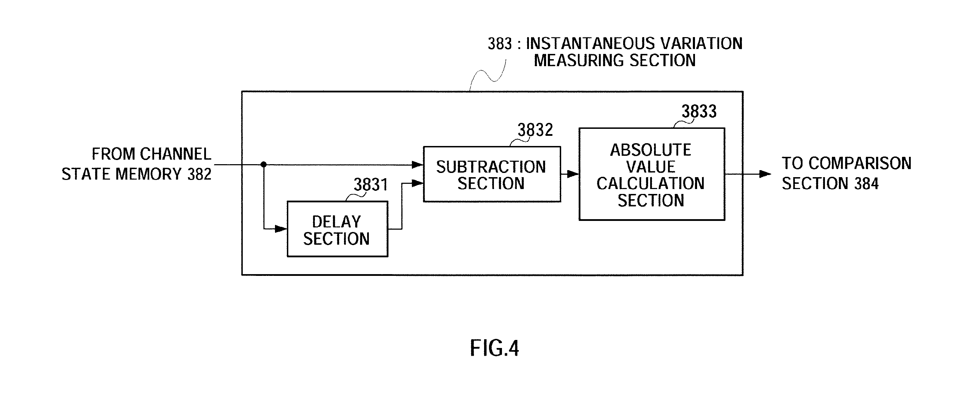

Next, instantaneous variation measuring section 383 shown in FIG. 3 will be described in detail using FIG. 4. As shown in FIG.4, instantaneous variation measuring section 383 is equipped with a delay section 3831, a subtraction section 3832, and an absolute value calculation section 3833.

Delay section 3831 delays a per-subcarrier (per-segment) SNR value input to subtraction section 3832 by holding the SNR value until the next SNR value is input.

Subtraction section 3832 calculates the difference between a per-subcarrier (per-segment) SNR value input from channel state memory 382 and the immediately preceding per-subcarrier (per-segment) SNR value held by delay section 3831.

Absolute value calculation section 3833 calculates the absolute value of the difference value input from subtraction section 3832 to obtain the SNR variation amount.

Next, the operation of CSI processing section 38 shown in FIG. 3 will be described in greater detail. Here, a case will be described in which CSI is obtained on a subcarrier-by-subcarrier basis. The following description refers to a communication system in which modulation parameters are set on a subcarrier-by-subcarrier basis, but by reading "subcarrier" as "segment, " it is also possible for this embodiment to be implemented in the same way for a communication system in which modulation parameters are set on a segment-by-segment basis.

With OFDM symbols received by a CSI transmitting apparatus, a channel response estimation carrier for estimating channel frequency response (channel response) is inserted between data carriers at predetermined intervals. In channel response estimation section 37, using a channel response estimation carrier, the amplitude variation and phase variation with which an OFDM symbol is received on a channel is estimated at time tₖ timing (where k is an integer) on a subcarrier-by-subcarrier basis. A channel estimation carrier is, for example, a known pilot signal. In a communication system in which blind estimation is performed, a data carrier may be used as a channel estimation carrier.

Quality level measuring section 381 measures a per-subcarrier SNR value γ_{m,k} from a channel response estimate input from channel response estimation section 37, and outputs this to channel state memory 382. Here, γ_{m,k} represents a value (in [dB] units) resulting from logarithmic transformation of the SNR value of the m'th subcarrier (where m = 1, 2, 3, ..., M) at time tₖ.

Channel state memory 382 stores per-subcarrier SNR value γ_{m,k} measured by quality level measuring section 381. SNR value γ_{m,k} stored in channel state memory 382 is updated each time a new SNR value is measured by quality level measuring section 381.

The channel response value estimation period and SNR measurement period are set as identical to the CSI feedback period or shorter than the CSI feedback period. The channel state memory 382 update period may be independent of the CSI feedback period. However, control is performed so that channel state memory 382 update processing does not occur during CSI frame generation.

In instantaneous variation measuring section 383, subtraction section 3832 finds the difference between SNR value γ_{m,k} stored in channel state memory 382 and SNR value γ_{m, k-1} measured at one earlier timing tₖ₋₁ of timing tₖ, and absolute value calculation section 3833 finds the absolute value of that difference. By this means, the per-subcarrier SNR variation amount per SNR value measurement time interval, Δγ_{m,k}, is obtained. Thus, SNR variation amount Δγ_{m,k} can be expressed as shown in Equation (1) below. ${Δ \begin{matrix}\end{matrix} γ}_{m , k} = \left|{γ}_{m , k}-{γ}_{m , k - 1}\right|$

Comparison section 384 compares the per-subcarrier SNR variation amount with a threshold value, and writes the comparison result to comparison result memory 385. Writing to comparison result memory 385 is performed as described below. In the following description, a case is described by way of example in which an OFDM symbol is composed of 24 subcarriers (subcarriers 1 through 24).

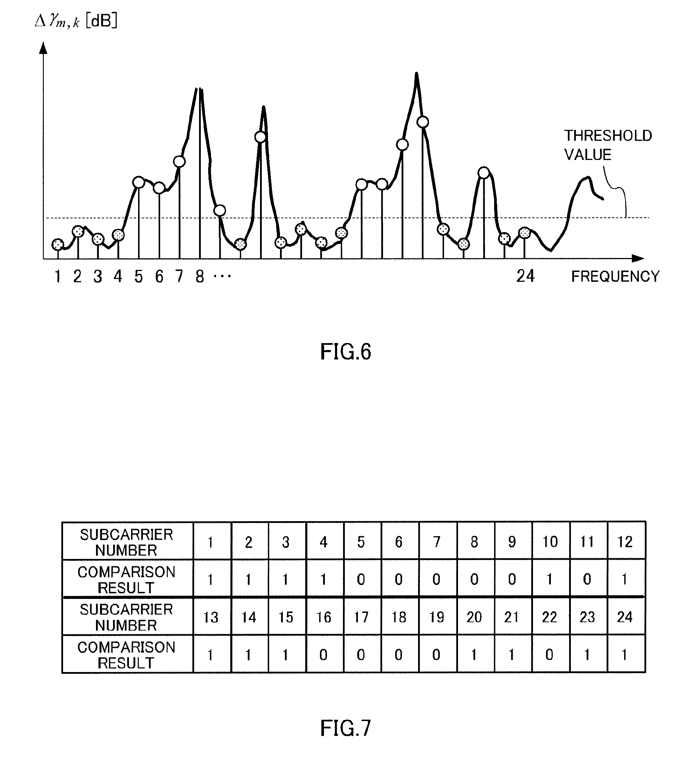

FIG.6 shows the relationship between SNR variation amount Δγ_{m,k} of each subcarrier and the threshold value. In the example shown in FIG.6, as a result of comparing SNR variation amount Δγ_{m,k} of each subcarrier with the threshold value, it is determined by comparison section 384 that the SNR variation amounts of subcarriers (SC) 1 through 4, 10, 12 through 15, 20, 21, 23, and 24 are less than or equal to the threshold value, and that the SNR variation amounts of subcarriers (SC) 5 through 9, 11, 16 through 19, and 22 exceed the threshold value. The comparison results are stored in comparison result memory 385 as shown in FIG.7. In FIG.7, "1" indicates that an SNR variation amount has been determined to be less than or equal to the thresholdvalue, and "0" indicates that an SNR variation amount has been determined to exceed the threshold value. Comparison result memory 385 updating is performed at the timing at which an update timing signal is input from CSI transmission control section 39.

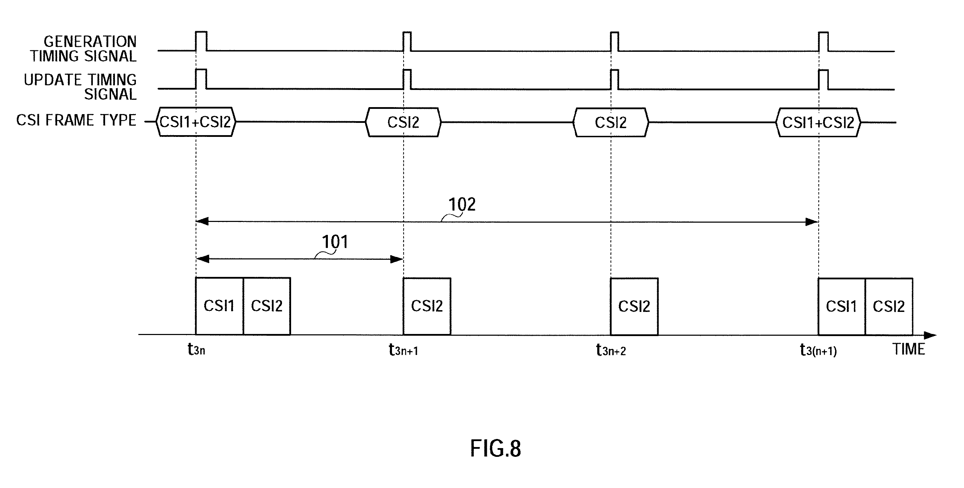

At the timing at which a generation timing signal is input from CSI transmission control section 39, CSI frame generation section 386 selects, from among subcarriers 1 through 24, subcarriers whose CSI is to be fed back to the CSI receiving apparatus according to a CSI frame type input from CSI transmission control section 39 and the comparison results shown in FIG. 7 stored in comparison result memory 385, and generates a CSI frame. CSI frame generation section 386 operates as shown in FIG.8. In the example shown in FIG.8, the CSI transmitting apparatus periodically feeds back two types of CSI frame to the CSI receiving apparatus according to comparison section 384 comparison results. Of the two types of CSI frame, one is a CSI frame comprising SNR values of subcarriers whose SNR variation amount is less than or equal to the threshold value (subcarriers 1 through 4, 10, 12 through 15, 20, 21, 23, and 24) (CSI1), and the other is a CSI frame comprising SNR values of subcarriers whose SNR variation amount exceeds the threshold value (subcarriers 5 through 9, 11, 16 through 19, and 22) (CSI2). That is to say, the SNR values of subcarriers whose SNR variation amount is less than or equal to the threshold value (subcarriers 1 through 4, 10, 12 through 15, 20, 21, 23, and 24) are not included in CSI2.

In FIG.8, first, a generation timing signal is input to CSI frame generation section 386 from CSI transmission control section 39 at timing t₃ₙ. At the same time, an update timing signal is input to comparison result memory 385, and therefore the contents of comparison result memory 385 are updated with the comparison results newly obtained by comparison section 384. After updating, the contents of comparison result memory 385 are now assumed to be as shown in FIG.7. Also, a signal indicating "CSI1+CSI2" as the CSI frame type is input to CSI frame generation section 386 from CSI transmission control section 39, and therefore CSI frame generation section 386 generates a CSI frame (CSI1+CSI2) containing the SNR values of all of subcarriers (SC) 1 through 24 in accordance with the indicated CSI frame type.

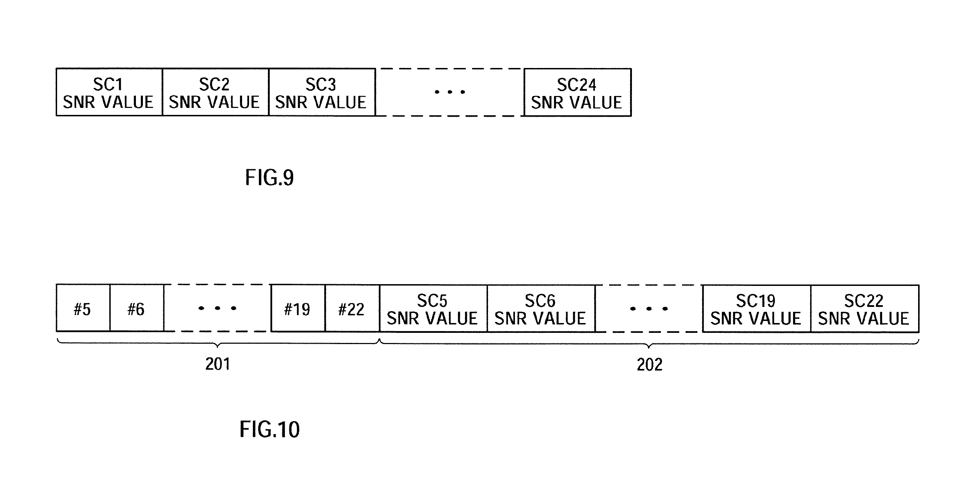

The frame format is shown in FIG.9. This frame format is also known by the CSI receiving apparatus. By this means, the CSI transmitting apparatus can feed back the CSI of all subcarriers to the CSI receiving apparatus at timing t₃ₙ. Since a CSI frame containing the SNR values of all subcarriers is generated at timing t₃ₙ, a frame format in which SNR values are arranged in order starting from subcarrier 1 has been assumed, but it is also possible to generate CSI1 and CSI2 individually and use a frame format in which these are linked. For example, it is possible to use a frame format in which CSI1 comprising subcarriers 1 through 4, 10, 12 through 15, 20, 21, 23, and 24 is followed by CSI2 comprising subcarriers 5 through 9, 11, 16 through 19, and 22.

Next, at timing t₃ₙ₊₁, in the same way as at timing t₃ₙ, from CSI transmission control section 39 a generation timing signal is input to CSI frame generation section 386 and an update timing signal is input to comparison result memory 385. The contents of comparison result memory 385 after updating are assumed to be once again as shown in FIG.7. As a signal indicating "CSI2" as the CSI frame type is input to CSI frame generation section 386 from CSI transmission control section 39, CSI frame generation section 386 generates a CSI frame (CSI2) comprising the SNR values of subcarriers 5 through 9, 11, 16 through 19, and 22 whose SNR variation amounts exceed the threshold value in accordance with the indicated CSI frame type. By this means, the CSI transmitting apparatus can feed back the CSI of only subcarriers whose SNR variation amounts exceed the threshold value to the CSI receiving apparatus at timing t₃ₙ₊₁.

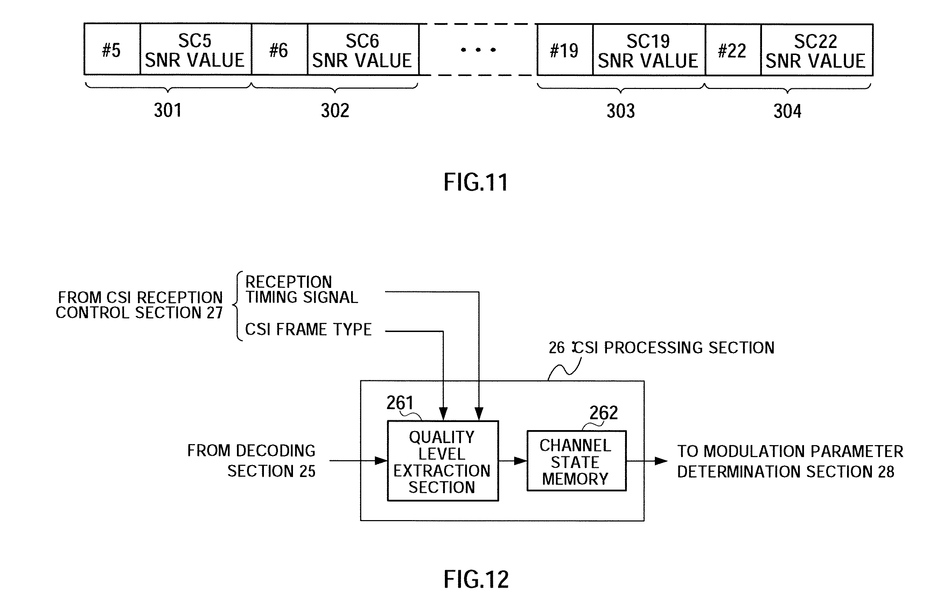

The frame format is shown in FIG.10. In the example shown in FIG.10, in the former part of the frame (201) subcarrier numbers are arranged as subcarrier identifiers, and in the latter part (202) SNR values corresponding to subcarrier numbers in the former part are arranged in the same order as the subcarrier numbers. As a different frame format, it is also possible to use the frame format shown in FIG.11. In the example shown in FIG.11, a subcarrier number and its corresponding SNR value are taken as a pair (such pairs being indicated by reference numbers 301 through 304), and these pairs (301 through 304) are arranged within the frame.

Next, at timing t₃ₙ₊₂, the same kind of processing is performed as at timing t₃ₙ₊₁, and at timing t₃₍ₙ₊₁₎, the same kind of processing is performed as at timing t₃ₙ. Thus, in the example shown in FIG.8, CSI1 transmission period (feedback period) 102 is three times as long as CSI2 transmission period (feedback period) 101. By making the CSI1 transmission period an integral multiple of the CSI2 transmission period in this way, when feeding back CSI of all subcarriers (in FIG.8, at timings t₃ₙ and t₃₍ₙ₊₁₎), the CSI can be transmitted together in one frame, allowing header information and so forth to be shared, and as a result enabling the amount of data necessary for the transmission of feedback information to be reduced.

Next, CSI processing section 26 shown in FIG.1 will be described in detail using FIG.12. As shown in FIG.12, CSI processing section 26 is equipped with a quality level extraction section 261 and channel state memory 262.

At the timing at which a reception timing signal is input from CSI reception control section 27, quality level extraction section 261 extracts per-subcarrier SNR values from a CSI frame (a CSI frame transmitted from the CSI transmitting apparatus to the CSI receiving apparatus) in accordance with a CSI frame type input from CSI reception control section 27, and outputs them to channel state memory 262 together with the subcarrier numbers.

Channel state memory 262 holds per-sub carrier SNR values. At this time, channel state memory 262 updates the SNR value of a subcarrier in accordance with a corresponding subcarrier number input from quality level extraction section 261.

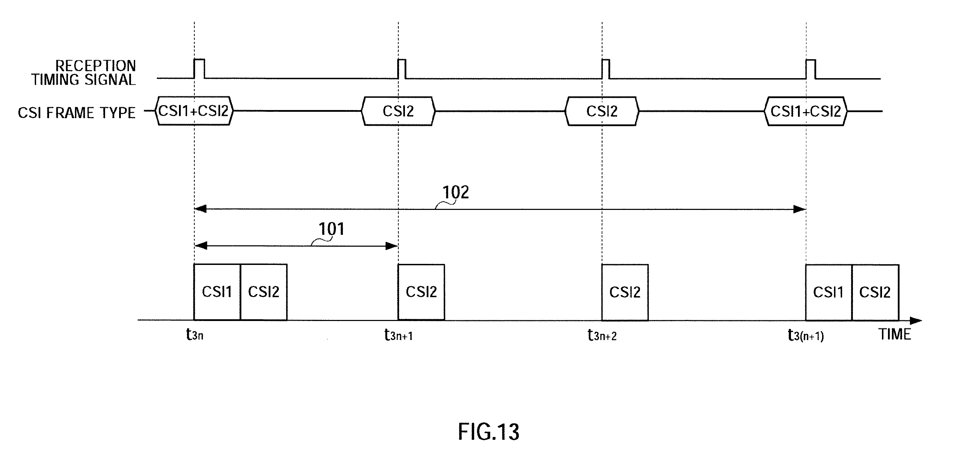

CSI processing section 26 operates as shown in FIG.13 with respect to the CSI frame generation section 386 operation shown in FIG.8.

In FIG.13, first, a reception timing signal is input to quality level extraction section 261 from CSI reception control section 27 at timing t₃ₙ. Also, a signal indicating "CSI1+CSI2" as the CSI frame type is input to quality level extraction section 261 fromCSI reception control section 27. Therefore, quality level extraction section 261 receives a CSI frame shown in FIG.9 - that is, a CSI frame (CSI1+CSI2) containing the SNR values of all of subcarriers 1 through 24. Then quality level extraction section 261 extracts the SNR values of subcarriers 1 through 24 from the CSI frame, adds the corresponding subcarrier numbers, and outputs the results to channel state memory 262. Channel state memory 262 updates the SNR values of all subcarriers. By means of this processing, the contents of channel state memory 382 of the CSI transmitting apparatus and the contents of channel state memory 262 of the CSI receiving apparatus at timing t₃ₙ can be synchronized. Also, by agreeing the order in which SNR values are arranged in a CSI frame beforehand between the CSI transmitting apparatus and the CSI receiving apparatus, the subcarrier number corresponding to each SNR value can be identified in common by both without sending subcarrier numbers contained in a CSI frame.

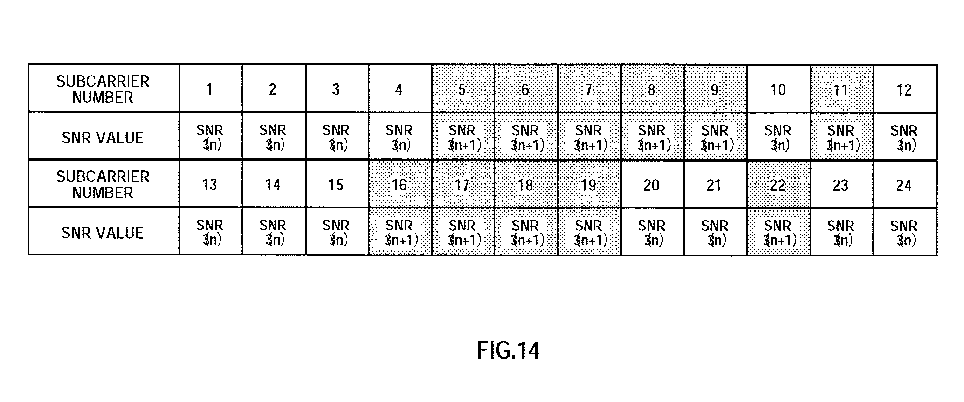

Next, at timing t₃ₙ₊₁, a reception timing signal is input to quality level extraction section 261 from CSI reception control section 27 in the same way as at timing t₃ₙ. Also, a signal indicating "CSI2" as the CSI frame type is input to quality level extraction section 261 from CSI reception control section 27. Therefore, quality level extraction section 261 receives a CSI frame shown in FIG.10 or FIG.11 - that is, a CSI frame (CSI2) comprising the subcarrier numbers and SNR values of subcarriers 5 through 9, 11, 16 through 19, and 22 whose SNR variation amounts exceed the threshold value. Then quality level extraction section 261 extracts the subcarrier numbers and SNR values of subcarriers 5 through 9, 11, 16 through 19, and 22 from CSI2, and outputs them to channel state memory 262. Channel state memory 262 updates SNR values corresponding to subcarrier numbers input from quality level extraction section 261. That is to say, channel state memory 262 updates only the SNR values of subcarriers 5 through 9, 11, 16 through 19, and 22 from among subcarriers 1 through 24. As a result, the state of channel state memory 262 after updating at timing t₃ₙ₊₁ is as shown in FIG.14. Reference codes 3n and 3n+1 in parentheses indicate update timings t₃ₙ and t₃ₙ₊₁ respectively. By means of this processing, the contents of channel state memory 382 of the CSI transmitting apparatus and the contents of channel state memory 262 of the CSI receiving apparatus at timing t₃ₙ₊₁ can be synchronized.

Next, at timing t₃ₙ₊₂, the same kind of processing is performed as at timing t₃ₙ₊₁, and at timing t₃₍ₙ₊₁₎, the same kind of processing is performed as at timing t₃ₙ.

Thus, according to this embodiment, a plurality of subcarriers composing a multicarrier signal are classified as subcarriers with a large time variation amount of channel state and subcarriers with a small time variation amount of channel state, and the CSI feedback period of subcarriers with a small time variation amount of channel state is made longer than the CSI feedback period of subcarriers with a large time variation amount of channel state. Therefore, according to this embodiment, the CSI transmission amount of subcarriers with a small time variation amount of channel state can be reduced while maintaining the CSI feedback period of subcarriers with a large time variation amount of channel state , enabling the amount of data in feedback information to be reduced while maintaining high system throughput.

### (Embodiment 2)

A CSI transmitting apparatus according to this embodiment has a similar configuration to that of Embodiment 1, differing from Embodiment 1 in that an update timing signal is input to comparison result memory 385 only at the timing at which CSI of all of subcarriers 1 through 24 is fed back, and comparison results are not updated at other timings.

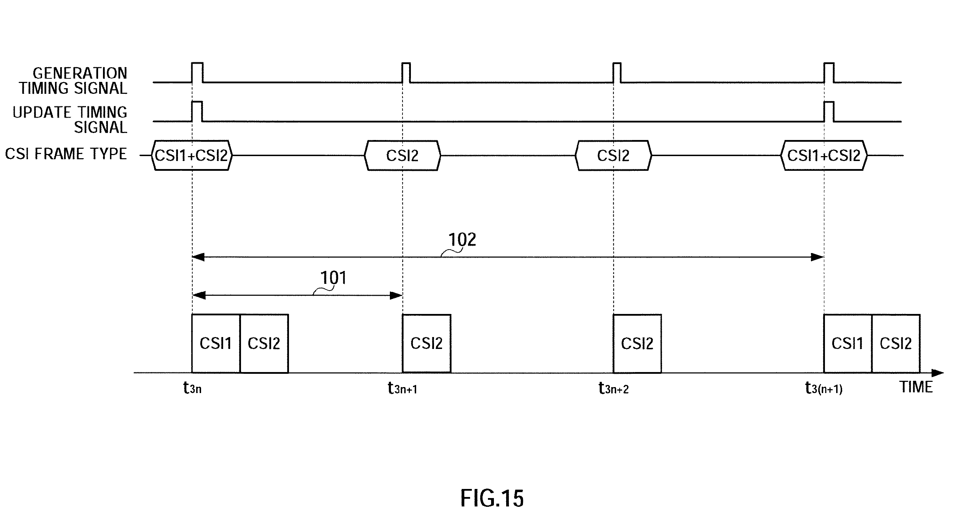

The operation of CSI frame generation section 386 according to this embodiment is described below. In this embodiment, CSI frame generation section 386 operates as shown in FIG.15.

In FIG.15, first, a generation timing signal is input to CSI frame generation section 386 from CSI transmission control section 39 at timing t₃ₙ. At the same time, an update timing signal is input to comparison result memory 385, and therefore the contents of comparison result memory 385 are updated with the comparison results newly obtained by comparison section 384. After updating, the contents of comparison result memory 385 are now assumed to be as shown in FIG.7. Also, a signal indicating "CSI1+CSI2" as the CSI frame type is input to CSI frame generation section 386 from CSI transmission control section 39, and therefore CSI frame generation section 386 generates a CSI frame (CSI1+CSI2) containing comparison results and SNR values of all of subcarriers (SC) 1 through 24 in accordance with the indicated CSI frame type.

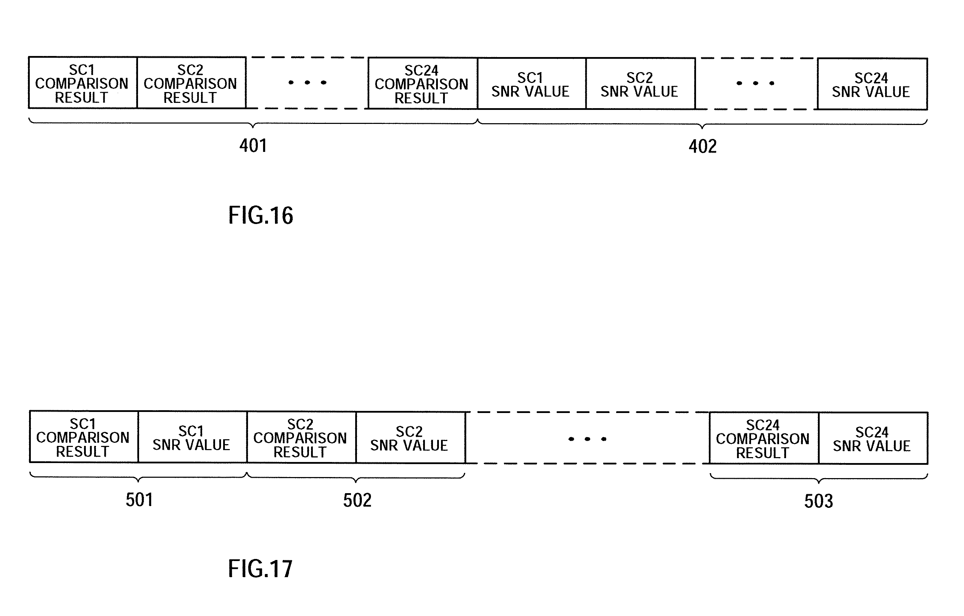

Frame formats are shown in FIG.16 and FIG.17. That is to say, a comparison result of each subcarrier is transmitted as CSI. This frame format is also known by the CSI receiving apparatus. In the example shown in FIG.16, in the former part of the frame (401) subcarrier 1 through 24 comparison results are arranged in ascending subcarrier number order, and in the latter part (402) subcarrier SNR values are arranged corresponding to the comparison results in the former part. In the example shown in FIG.17, a subcarrier comparison result and SNR value are taken as a pair (such pairs being indicated by reference numbers 501 through 503), and these pairs (501 through 503) are arranged in ascending subcarrier number order. In the formats shown in FIG.16 and FIG.17, a comparison result is 1-bit data comprising either "0" or "1."

Next, at timing t₃ₙ₊₁, a generation timing signal is input to CSI frame generation section 386 from CSI transmission control section 39 in the same way as at timing t₃ₙ. However, an update timing signal is not input, and therefore comparison result memory 385 is not updated. The contents of comparison result memory 385 thus remain as shown in FIG.7. As a signal indicating "CSI2" as the CSI frame type is input to CSI frame generation section 386 from CSI transmission control section 39, CSI frame generation section 386 generates a CSI frame (CSI2) comprising the SNR values of subcarriers 5 through 9, 11, 16 through 19, and 22 whose SNR variation amounts exceed the threshold value in accordance with the indicated CSI frame type. By this means, the CSI transmitting apparatus can feed back the CSI of only subcarriers whose SNR variation amounts exceed the threshold value to the CSI receiving apparatus at timing t₃ₙ₊₁.

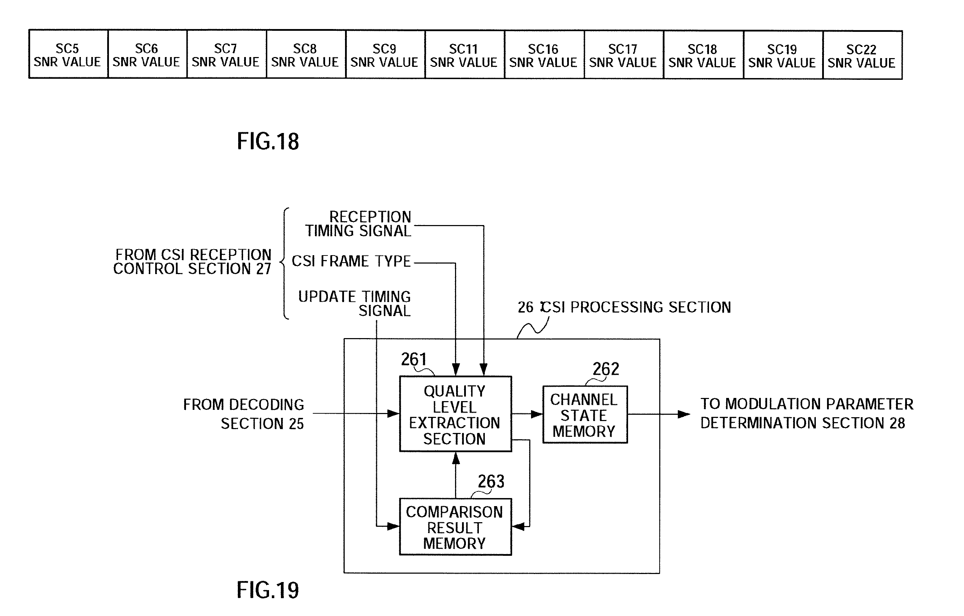

The frame format is shown in FIG.18. In the example shown in FIG.18, the SNR values of subcarriers 5 through 9, 11, 16 through 19, and 22 are arranged in ascending subcarrier number order. Subcarrier numbers are not included. By agreeing beforehand between the CSI transmitting apparatus and the CSI receiving apparatus that SNR values are to be arranged in ascending (or descending) subcarrier number order in this way, the subcarrier number corresponding to each SNR value can be identified in common by both without sending subcarrier numbers contained in a CSI frame. Thus, since it is no longer necessary to send subcarrier numbers contained in a CSI frame, the CSI2 data amount can be reduced.

Next, at timing t₃ₙ₊₂, the same kind of processing is performed as at timing t₃ₙ₊₁, and at timing t₃₍ₙ₊₁₎, the same kind of processing is performed as at timing t₃ₙ.

The configuration of CSI processing section 26 according to this embodiment will now be described using FIG.19. As shown in FIG.19, CSI processing section 26 according to this embodiment is equipped with comparison result memory 263 in addition to the configuration elements of CSI processing section 26 according to Embodiment 1 (FIG.12).

At the timing at which a reception timing signal is input from CSI reception control section 27, quality level extraction section 261 extracts per-subcarrier SNR values from a CSI frame received from the CSI transmitting apparatus in accordance with a CSI frame type input from CSI reception control section 27, and outputs them to channel state memory 262 together with the subcarrier number. Quality level extraction section 261 also extracts per-subcarrier comparison results from the CSI frame, and outputs them to comparison result memory 263.

Comparison result memory 263 holds comparison results input from quality level extraction section 261, and when an update timing signal is input fromCSI reception control section 27, updates the held comparison results with comparison results extracted from the new CSI frame.

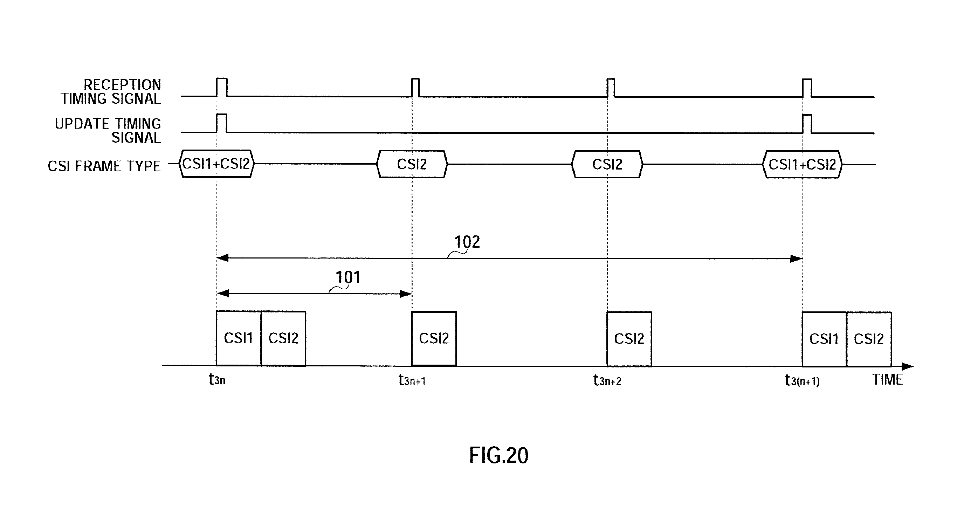

CSI processing section 26 shown in FIG. 19 operates as shown in FIG.20 with respect to the CSI frame generation section 386 operation shown in FIG.15.

In FIG.20, first, a reception timing signal is input to quality level extraction section 261 from CSI reception control section 27 at timing t₃ₙ. Also, a signal indicating "CSI1+CSI2" as the CSI frame type is input to quality level extraction section 261 from CSI reception control section 27. Therefore, quality level extraction section 261 receives a CSI frame shown in FIG.16 or FIG.17 - that is, a CSI frame (CSI1+CSI2) containing comparison results and SNR values of all of subcarriers 1 through 24. Then quality level extraction section 261 extracts the comparison results and SNR values of subcarriers 1 through 24 from the CSI frame, outputs the comparison results to comparison result memory 263, and adds subcarrier numbers to the SNR values and outputs them to channel state memory 262. Channel state memory 262 updates the SNR values of all subcarriers.

At timing t₃ₙ, an update timing signal is input to comparison result memory 263, and therefore comparison result memory 263 updates the held comparison results with the comparison results extracted at timing t₃ₙ. By means of this processing, the contents of comparison result memory 385 of the CSI transmitting apparatus and the contents of comparison result memory 263 of the CSI receiving apparatus at timing t₃ₙ can be synchronized.

Next, at timing t₃ₙ₊₁, a reception timing signal is input to quality level extraction section 261 from CSI reception control section 27 in the same way as at timing t₃ₙ. Also, a signal indicating "CSI2" as the CSI frame type is input to quality level extraction section 261 from CSI reception control section 27. However, an update timing signal is not input to comparison result memory 263, and therefore comparison result memory 263 is not updated at timing t₃ₙ₊₁.

Quality level extraction section 261 receives a CSI frame shown in FIG.18 - that is, a CSI frame (CSI2) comprising only SNR values of subcarriers 5 through 9, 11, 16 through 19, and 22 whose SNR variation amounts exceed the threshold value (that is, SNR values for which the comparison result is "0"). Then quality level extraction section 261 extracts the SNR values of subcarriers 5 through 9, 11, 16 through 19, and 22 from CSI2, and furthermore references compari son result memory 263 and acquires the subcarrier numbers of subcarriers for which the comparison result is "0" from comparison result memory 263. Quality level extraction section 261 then adds the corresponding subcarrier numbers to the extracted SNR values, and outputs them to channel state memory 262.

As the order of arrangement of SNR values in CSI2 has been set beforehand as ascending (or descending) subcarrier number order in this way, quality level extraction section 261 can identify the subcarrier to which each SNR value corresponds by referencing comparison result memory 263, even though subcarrier numbers are not included in CSI2. Also, since it is no longer necessary to transmit subcarrier numbers by means of CSI2, the amount of data in feedback information can be reduced.

Channel state memory 262 updates SNR values corresponding to subcarrier numbers input from quality level extraction section 261. That is to say, channel state memory 262 updates only the SNR values of subcarriers 5 through 9, 11, 16 through 19, and 22 from among subcarriers 1 through 24. As a result, the state of channel state memory 262 after updating at timing t₃ₙ₊₁ is as shown in FIG.14. By means of this processing, the contents of channel state memory 382 of the CSI transmitting apparatus and the contents of channel state memory 262 of the CSI receiving apparatus at timing t₃ₙ₊₁ can be synchronized.

Next, at timing t₃ₙ₊₂, the same kind of processing is performed as at timing t₃ₙ₊₁, and at timing t₃₍ₙ₊₁₎, the same kind of processing is performed as at timing t₃ₙ.

Thus, according to this embodiment, by transmitting a comparison result of each subcarrier as 1 bit, comparison results can be shared by a CSI transmitting apparatus and a CSI receiving apparatus, and it is no longer necessary to transmit a subcarrier number for each SNR value in CSI2, enabling the amount of data in feedback information to be further reduced compared with Embodiment 1. Therefore, the usefulness of Embodiment 2 increases in proportion to the number of subcarriers (or segments) included in one OFDM symbol.

### (Embodiment 3)

Most multipath channel environments are NLOS (Non line of sight) environments in which there is an obstruction between a transmitting station and a receiving station, and delayed waves are known to be subject to Rayleigh variation. When the delay time of a delayed wave is large relative to the symbol time, its characteristics have frequency selectivity. In this kind of frequency selective Rayleigh fading channel, cumulative probability distribution with respect to per-subcarrier SNR is as shown below.

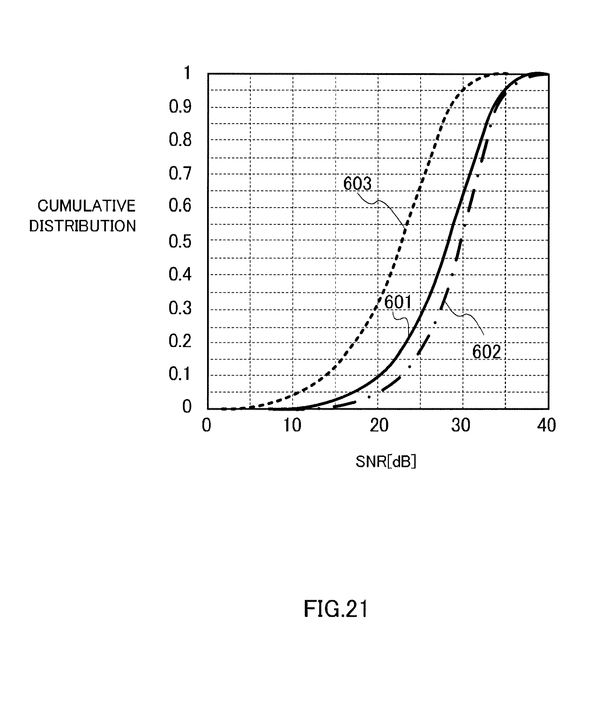

FIG.21 is a graph showing per-subcarrier SNR normalized cumulative probability distribution when average SNR = 30 dB in a frequency selective Rayleigh fading channel. Reference number 601 indicates the cumulative probability distribution of SNR for all subcarriers, reference number 602 indicates the cumulative probability distribution of SNR of subcarriers for which the amount of variation per unit time is less than 1 dB, and reference number 603 indicates the cumulative probability distribution of SNR of subcarriers for which the amount of variation per unit time is 1 dB or more.

It can be seen from FIG.21 that subcarriers for which the amount of variation of the SNR value per unit time is 1 dB or more are distributed in an area of comparatively small SNR values within the area in which the SNR values of those subcarriers are distributed. On the other hand, subcarriers for which the amount of variation of the SNR value per unit time is less than 1 dB are distributed in an area of comparatively large SNR values within the area in which the SNR values of those subcarriers are distributed. Therefore, by setting a threshold value based on an SNR value averaged over all subcarriers (an average SNR), and comparing the SNR value of each subcarrier with that threshold value, subcarriers can be divided into a group of subcarriers for which the amount of variation of the SNR value per unit time is large, and a group of subcarriers for which the amount of variation of the SNR value per unit time is small.

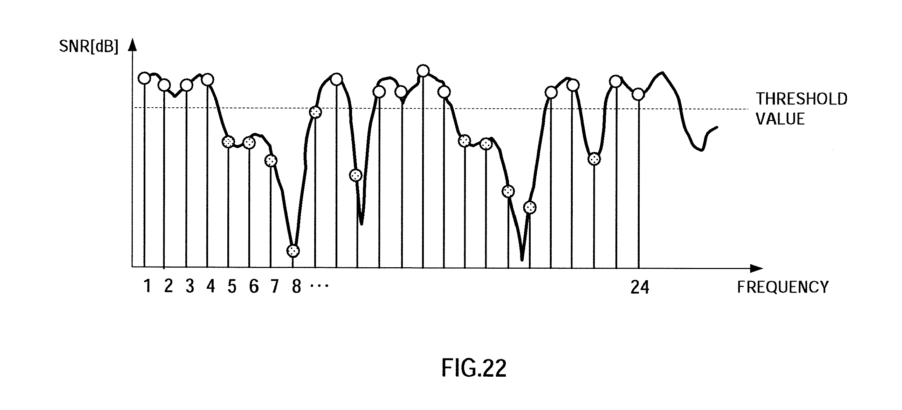

Thus, in this embodiment, as shown in FIG.22, the SNR value of each subcarrier is compared with a threshold value set based on an average SNR, and the plurality of subcarriers (here, subcarriers 1 through 24) composing an OFDM symbol are divided into subcarriers whose SNR variation amount is large, and subcarriers whose SNR variation amount is small.

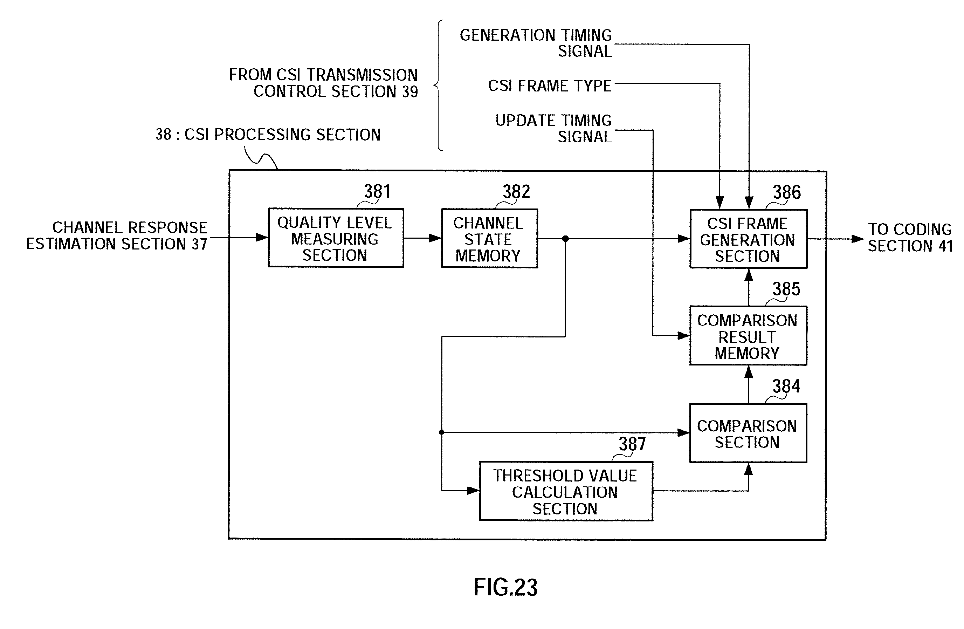

The configuration of CSI processing section 38 according to this embodiment will now be described using FIG.23. As shown in FIG.23, in comparison with CSI processing section 38 according to Embodiment 1 (FIG.3), CSI processing section 38 according to this embodiment lacks instantaneous variation measuring section 383 but is additionally equipped with a threshold value calculation section 387.

Threshold value calculation section 387 averages the per-subcarrier SNR values stored in channel state memory 382 for all subcarriers and obtains an average SNR, and sets a comparison section 384 threshold value using that average SNR. Details of threshold value calculation section 387 will be given later herein.

Comparison section 384 compares the threshold value calculated by threshold value calculation section 387 with per-subcarrier SNR values stored in channel state memory 382.

Comparison result memory 385 stores and holds comparison section 384 comparison results on a subcarrier-by-subcarrier basis. Comparison result memory 385 stored contents are updated in accordance with an update timing signal input from CSI transmission control section 39.

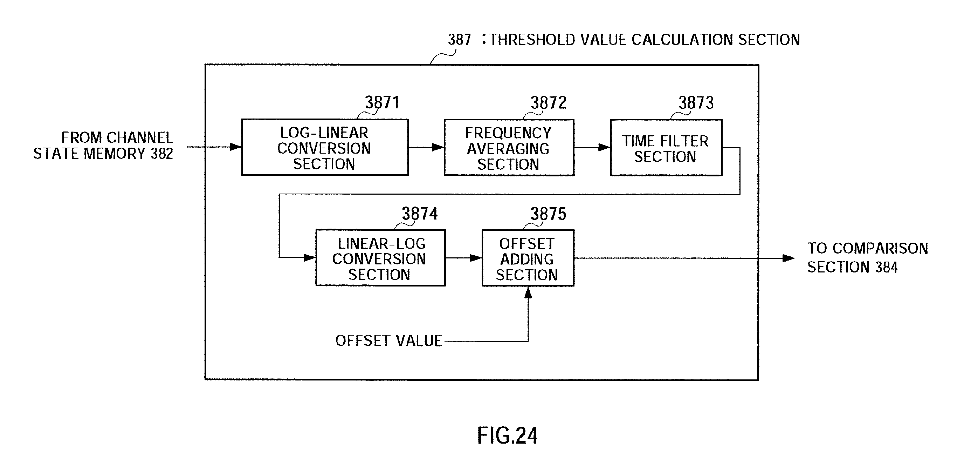

Next, threshold value calculation section 387 shown in FIG.23 will be described in detail using FIG.24. As shown in FIG.24, threshold value calculation section 387 is equipped with a log-linear conversion section 3871, a frequency averaging section 3872, a time filter section 3873, a linear-log conversion section 3874, and an offset adding section 3875.

Log-linear conversion section 3871 converts a per-subcarrier SNR value γ_{m,k} input from channel state memory 382 from a dB value to a true value, SNR value Γ_{m,k}. If input per-subcarrier SNR values are true values, this log-linear conversion section 3871 is unnecessary.

Frequency averaging section 3872 averages per-subcarrier SNR values (true values) Γ_{m,k} for all of subcarriers 1 through 24 in accordance with Equation (2) below, and calculates an SNR average value (average SNR) in the frequency domain. In this example the SNR average value is found, but the median value may be found instead. ${\overline{Γ}}_{k} = \frac{1}{M} {\sum }_{m = 0}^{M - 1} {Γ}_{m , k}$
Γ̅*ₖ* : SNR average value (true value)

Time filter section 3873 performs time-direction filtering (time filtering) on the average SNR (true value). Performing time filtering on the average SNR enables an average SNR to be obtained that does not track instantaneous channel variation but does track short-interval variation (shadowing variation), and a time constant that enables such an average SNR to be obtained is set in time filter section 3873. Therefore, in a channel situation in which sufficient frequency selectivity can be obtained across the communication band, an SNR average value or median value obtained in the frequency domain may be used as-is without performing time filtering. As time filtering, average SNR (true value) moving average processing for all past subcarriers may be used, or an FIR filter or IIR filter may be used. The time constant of the filter is set smaller enough to track the speed of short-interval variation (shadowing variation). In the simplest configuration, time filter section 3873 may be configured in accordance with Equation (3) below, for example. ${\hat{Γ}}_{k} = μ ⋅ {\hat{Γ}}_{k} + \left(1-μ\right) ⁢ {\hat{Γ}}_{k - 1} , 0 \leq μ \leq 1$
Γ̂*ₖ*: Time-filtered average SNR value (true value)

Linear-log conversion section 3874 converts a time-filtered average SNR value (true value) to a dB average SNR value.

Offset adding section 3875 adds an offset value to a dB average SNR value. By this means, the threshold value to be used in comparison section 384 is calculated. Therefore, the threshold value is expressed by Equation (4) below. It is also possible for threshold value calculation section 387 to be configured without the inclusion of offset adding section 3875. ${γ}_{threshold} = {\overline{γ}}_{k} + α \left[dB\right]$
γ*_{threshold}*: Threshold value
γ̅*ₖ*: Time-filtered average SNR value (dB value)
α: Offset value

Comparison section 384 then compares a per-subcarrier SNR value with the threshold value, and writes the comparison result to comparison result memory 385. Writing to comparison result memory 385 is performed as described below.

In the example shown in FIG.22, as a result of comparing the SNR value of each subcarrier with the threshold value, it is determined by comparison section 384 that the SNR values of subcarriers 1 through 4, 10, 12 through 15, 20, 21, 23, and 24 are greater than or equal to the threshold value, and the SNR values of subcarriers 5 through 9, 11, 16 through 19, and 22 are less than the threshold value. The comparison results are stored in comparison result memory 385 as shown in FIG.7. In this embodiment, "1" in FIG.7 indicates that an SNR value has been determined to be greater than or equal to the threshold value, and "0" indicates that an SNR value has been determined to be less than the threshold value. Comparison result memory 385 updating is performed at the timing at which an update timing signal is input from CSI transmission control section 39.

At the timing at which a generation timing signal is input from CSI transmission control section 39, CSI frame generation section 386 selects, from among subcarriers 1 through 24, subcarriers whose CSI is to be fed back to the CSI receiving apparatus according to a CSI frame type input from CSI transmission control section 39 and the comparison results shown in FIG. 7 stored in comparison result memory 385, and generates a CSI frame. CSI frame generation section 386 operates as shown in FIG.15.

That is to say, first, a generation timing signal is input to CSI frame generation section 386 from CSI transmission control section 39 at timing t₃ₙ. At the same time, an update timing signal is input to comparison result memory 385, and therefore the contents of comparison result memory 385 are updated with the comparison results newly obtained by comparison section 384. At this time, the threshold value used by comparison section 384 is a threshold value newly calculated by threshold value calculation section 387 at timing t₃ₙ. After updating, the contents of comparison result memory 385 are now assumed to be as shown in FIG. 7. Also, a signal indicating "CSI1+CSI2" as the CSI frame type is input to CSI frame generation section 386 from CSI transmission control section 39, and therefore CSI frame generation section 386 generates a CSI frame (CSI1+CSI2) containing the SNR values of all of subcarriers 1 through 24 in accordance with the indicated CSI frame type. The frame format is as shown in FIG.9.

Next, at timing t₃ₙ₊₁, a generation timing signal is input to CSI frame generation section 386 from CSI transmission control section 39 in the same way as at timing t₃ₙ. However, an update timing signal is not input, and therefore comparison result memory 385 is not updated. The contents of comparison result memory 385 thus remain as shown in FIG. 7. Anew threshold value is not calculated. As a signal indicating "CSI2" as the CSI frame type is input to CSI frame generation section 386 from CSI transmission control section 39, CSI frame generation section 386 generates a CSI frame (CSI2) comprising the SNR values of subcarriers 5 through 9, 11, 16 through 19, and 22 whose SNR values are less than the threshold value in accordance with the indicated CSI frame type. By this means, the CSI transmitting apparatus can feed back the CSI of only subcarriers whose SNR values are less than the threshold value to the CSI receiving apparatus at timing t₃ₙ₊₁. The frame format is as shown in FIG.18.

Next, at timing t₃ₙ₊₂, the same kind of processing is performed as at timing t₃ₙ₊₁, and at timing t₃₍ₙ₊₁₎, the same kind of processing is performed as at timing t₃ₙ.

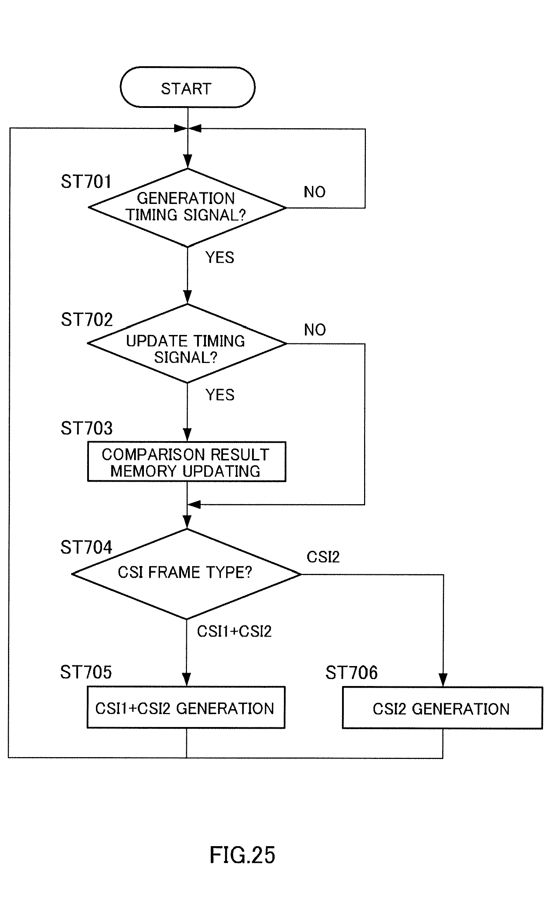

In flowchart form, the above operations are as shown in FIG.25. That is to say, in ST (step) 701, it is determined whether or not a generation timing signal is input, and if a generation timing signal is input (ST701: YES), in ST702 it is determined whether or not an update timing signal is input. If an update timing signal is input (ST702: YES), the processing flow proceeds to ST704 after the comparison result memory has been updated, whereas if an update timing signal is not input (ST702: NO), the processing flow proceeds to ST704 without the comparison result memory being updated. In ST704, the CSI frame type is determined. If a signal indicating "CSI1+CSI2" as the CSI frame type is input, in ST705 a CSI frame (CSI1+CSI2) is generated that contains the SNR values of all of subcarriers 1 through 24. On the other hand, if a signal indicating "CSI2" as the CSI frame type is input, in ST706 a CSI frame (CSI2) is generated that comprises the SNR values of subcarriers 5 through 9, 11, 16 through 19, and 22 whose SNR values are less than the threshold value.

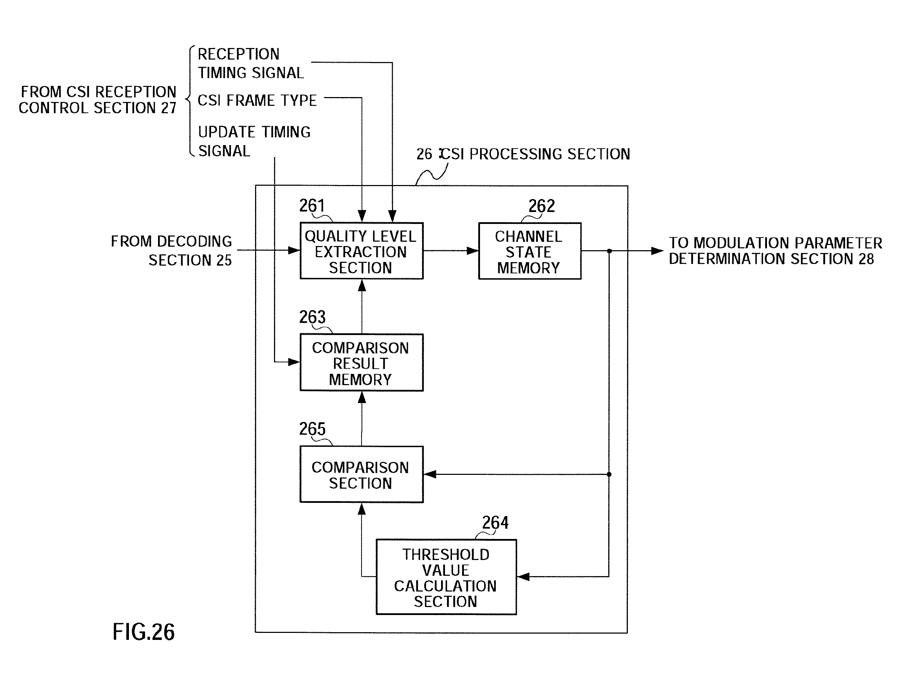

Next, the configuration of CSI processing section 26 according to this embodiment will be described using FIG.26. As shown in FIG.26, CSI processing section 26 according to this embodiment is equipped with a threshold value calculation section 264 and a comparison section 265 in addition to the configuration elements of CSI processing section 26 according to Embodiment 2 (FIG.19). Threshold value calculation section 264 and comparison section 265 have identical configurations to threshold value calculation section 387 and comparison section 384 of a CSI transmitting apparatus (FIG.23 and FIG.24), and also operate in the same way as described above, and therefore descriptions thereof are omitted here.

CSI processing section 26 shown in FIG.26 operates as shown in FIG.20 with respect to the operation of CSI frame generation section 386 shown in FIG.23.

That is to say, first, a reception timing signal is input to quality level extraction section 261 from CSI reception control section 27 at timing t₃ₙ. Also, a signal indicating "CSI1+CSI2" as the CSI frame type is input to quality level extraction section 261 from CSI reception control section 27. Therefore, quality level extraction section 261 receives a CSI frame shown in FIG.9 - that is, a CSI frame (CSI1+CSI2) containing the SNR values of all of subcarriers 1 through 24. Then quality level extraction section 261 extracts the SNR values of subcarriers 1 through 24 from the CSI frame, adds the corresponding subcarrier numbers, and outputs them to channel state memory 262. Channel state memory 262 updates the SNR values of all subcarriers.

At timing t₃ₙ, an update timing signal is input to comparison result memory 263, and therefore comparison result memory 263 updates the held comparison results with the comparison results obtained by means of comparison section 265 at timing t₃ₙ. The threshold value used by comparison section 265 at this time is a threshold value newly calculated by threshold value calculation section 264 at timing t₃ₙ. The threshold value calculation method used by threshold value calculation section 264 is the same as that used by threshold value calculation section 387 of the CSI transmitting apparatus. By means of this processing, the contents of comparison result memory 385 of the CSI transmitting apparatus and the contents of comparison result memory 263 of the CSI receiving apparatus at timing t₃ₙ can be synchronized.

Next, at timing t₃ₙ₊₁, a reception timing signal is input to quality level extraction section 261 from CSI reception control section 27 in the same way as at timing t₃ₙ. Also, a signal indicating "CSI2" as the CSI frame type is input to quality level extraction section 261 from CSI reception control section 27. However, an update timing signal is not input to comparison result memory 263. Therefore, comparison result memory 263 is not updated at timing t₃ₙ₊₁, but remains in the state to which it was updated at t₃ₙ. A new threshold value is not calculated.

Quality level extraction section 261 receives a CSI frame shown in FIG.18 - that is, a CSI frame (CSI2) comprising only SNR values of subcarriers 5 through 9, 11, 16 through 19, and 22 whose SNR values are less than the threshold value (that is, SNR values for which the comparison result is "0"). Then quality level extraction section 261 extracts the SNR values of subcarriers 5 through 9, 11, 16 through 19, and 22 from CSI2, and furthermore references comparison result memory 263 acquires the subcarrier numbers of subcarriers for which the comparison result is "0" from comparison result memory 263. Quality level extraction section 261 then adds the corresponding subcarrier numbers to the extracted SNR values, and outputs them to channel state memory 262.

In the example shown in FIG.18, the SNR values of subcarriers 5 through 9, 11, 16 through 19, and 22 are arranged in ascending subcarrier number order. Subcarrier numbers are not included. By agreeing beforehand between the CSI transmitting apparatus and the CSI receiving apparatus that SNR values are to be arranged in ascending (or descending) subcarrier number order in this way, the subcarrier number corresponding to each SNR value can be identified in common by both without sending subcarrier numbers contained in a CSI frame. Thus, since it is no longer necessary to send subcarrier numbers contained in a CSI frame, the CSI2 data amount can be reduced.

Channel state memory 262 updates SNR values corresponding to subcarrier numbers input from quality level extraction section 261. That is to say, channel state memory 262 updates only the SNR values of subcarriers 5 through 9, 11, 16 through 19, and 22 from among subcarriers 1 through 24. As a result, the state of channel state memory 262 after updating at timing t₃ₙ₊₁ is as shown in FIG.14. By means of this processing, the contents of channel state memory 382 of the CSI transmitting apparatus and the contents of channel state memory 262 of the CSI receiving apparatus at timing t₃ₙ₊₁ can be synchronized.

Next, at timing t₃ₙ₊₂, the same kind of processing is performed as at timing t₃ₙ₊₁, and at timing t₃₍ₙ₊₁₎, the same kind of processing is performed as at timing t₃ₙ.

In flowchart form, the above operations are as showninFIG.27. Thatistosay, inST801, it is determined whether or not a reception timing signal is input, and if a reception timing signal is input (ST801: YES), in ST802 the CSI frame type is determined. If a signal indicating "CSI1+CSI2" as the CSI frame type is input, in ST803 the channel states of all subcarriers (that is, the SNR values of all of subcarriers 1 through 24) are updated. On the other hand, if a signal indicating "CSI2" as the CSI frame type is input, in ST804 the channel states of CSI2 (that is, the SNR values of subcarriers 5 through 9, 11, 16 through 19, and 22 whose SNR values are less than the threshold value) are updated. Then, in ST805, it is determined whether or not an update timing signal is input. If an update timing signal is input (ST805: YES), the comparison result memory is updated. On the other hand, if an update timing signal is not input (ST805: NO), the processing flow returns to ST801 and it is again determined whether or not a reception timing signal is input.

Thus, according to this embodiment, in a CSI receiving apparatus, as in a CSI transmitting apparatus, a threshold value is calculated, and that calculated threshold value is compared with the SNR value of each subcarrier, so that it is no longer necessary for subcarrier numbers and per-subcarrier comparison results to be included in a CSI frame fed back from the CSI transmitting apparatus to the CSI receiving apparatus, thus enabling the amount of data in feedback information to be further reduced compared with Embodiments 1 and 2.

Here, as stated above, most multipath environments are NLOS (Non line of sight) environments in which there is an obstruction between a transmitting station and a receiving station, and delayed waves are known to be subject to Rayleigh variation. When the delay time of a delayed wave is large relative to the symbol time, its characteristics have frequency selectivity. A histogram of variation amount per unit time for per-subcarrier SNR in this kind of frequency selective Rayleigh fading channel is shown below.

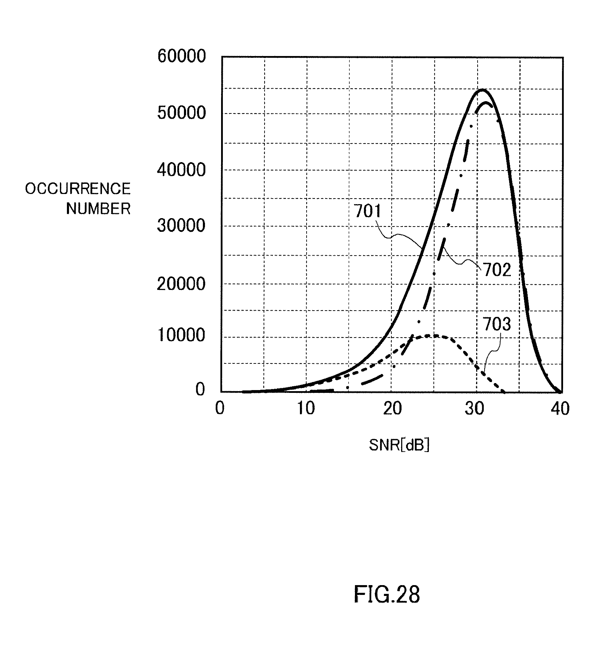

FIG.28 is a graph showing per-subcarrier SNR occurrence number distribution when average SNR = 30 dB in a frequency selective Rayleigh fading channel. Reference number 701 indicates the occurrence number distribution of SNR values of all subcarriers, reference number 702 indicates the occurrence number distribution of SNR values of subcarriers for which the amount of variation per unit time is less than 1 dB, and reference number 703 indicates the occurrence number distribution of SNR values of subcarriers for which the amount of variation per unit time is 1 dB or more.

It can be seen from FIG.28 that, out of all the subcarriers, most are subcarriers for which the amount of variation of the SNR value per unit time is less than 1 dB. This shows that there are a large number of subcarriers for which it is possible for the feedback period to be made large, and thus shows that the effect of the amount of data in feedback information being reduced by means of the present invention is great. For example, in a comparison at the maximum mobility with the above-described conventional technology, with the above-described conventional technology CSI feedback was performed every time for all subcarriers in line with subcarriers for which the time variation amount is large. In contrast, with the present invention, as described above, CSI feedback is performed every time only for subcarriers for which the time variation amount is large (that is, the SNR value is small), and CSI feedback is not performed every time for subcarriers for which the time variation amount is small (that is, the SNR value is large). Thus, the present invention enables the amount of data in feedback information to be reduced.

### (Embodiment 4)

This embodiment differs from Embodiment 3 in that a plurality of subcarriers (here, subcarriers 1 through 24) composing an OFDM symbol are classified into a plurality of groups according to CSI frame size.

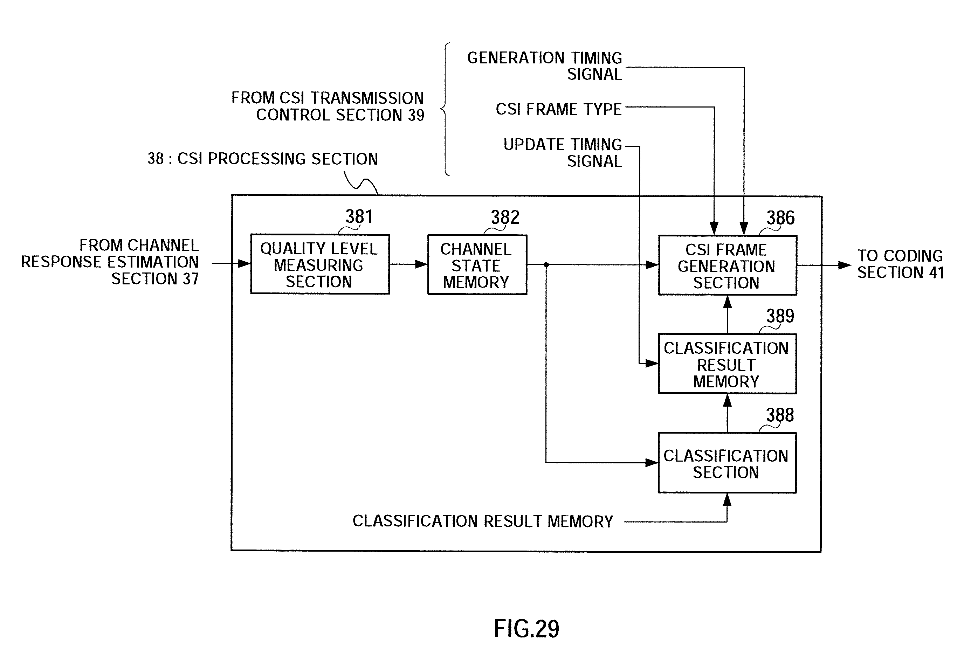

The configuration of CSI processing section 38 according to this embodiment will now be described using FIG.29. As shown in FIG.29, in comparison with CSI processing section 38 according to Embodiment 1 (FIG.3), CSI processing section 38 according to this embodiment lacks instantaneous variation measuring section 383, comparison section 384, and comparison result memory 385, but is additionally equipped with a classification section 388 and classification result memory 389.

Classification section 388 classifies per-subcarrier SNR values stored in channel state memory 382 into a plurality of groups according to CSI frame size, indicated by CSI frame size information. The smaller the CSI frame size, the smaller is the amount of CSI data that can be contained in one CSI frame, and therefore the greater is the number of groups into which classification is performed by section 388. Classification section 388 classifies subcarriers into a plurality of groups in high-to-low or low-to-high SNR value order. An actual example of classification will be given later herein.

Classification result memory 389 stores and holds classification section 388 classification results on a subcarrier-by-subcarrier basis. Classification result memory 389 stored contents are updated in accordance with an update timing signal input from CSI transmission control section 39.

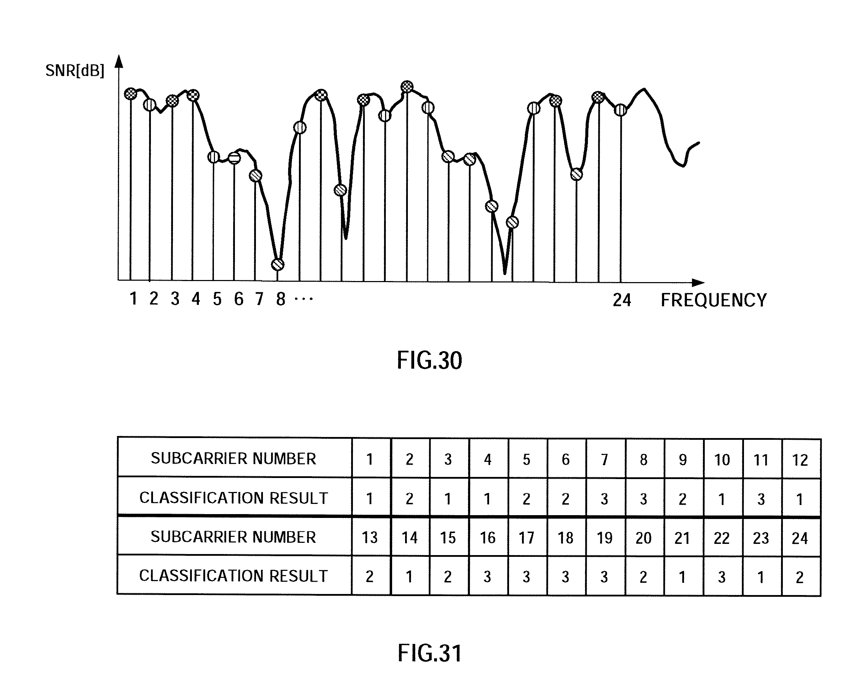

Next, an actual example of classification by classification section 388 will be given using FIG.30. Here, a case is described by way of example in which the CSI frame size is a size that allows transmission of the SNR values of eight subcarriers, and subcarriers 1 through 24 are classified into three groups.

When the SNR values of subcarriers 1 through 24 are as shown in FIG.30, classification section 388 classifies subcarriers 1 through 24 into three groups (groups 1, 2, and 3) in high-to-low SNR value order (that is, low-to-high SNR value variation amount order). Classification section 388 may also classify subcarriers 1 through 24 into three groups (groups 1, 2, and 3) in low-to-high SNR value order (that is, high-to-low SNR value variation amount order). As a result, subcarriers 1, 3, 4, 10, 12, 14, 21, and 23 are classified into group 1, subcarriers 2, 5, 6, 9, 13, 15, 20, and 24 are classified into group 2, and subcarriers 7, 8, 11, 16, 17, 18, 19, and 22 are classified into group 3. These classification results are stored in classification result memory 389 as shown in FIG.31. Classification result memory 389 updating is performed at the timing at which an update timing signal is input from CSI transmission control section 39.

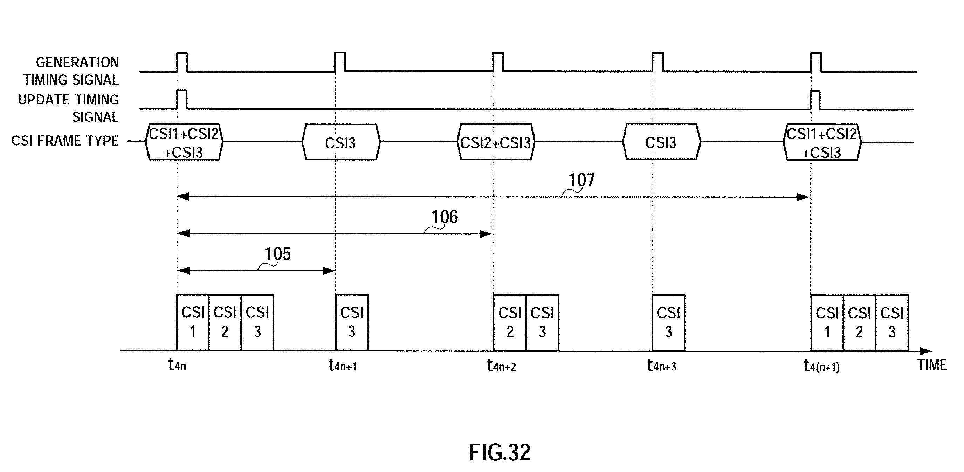

At the timing at which a generation timing signal is input from CSI transmission control section 39, CSI frame generation section 386 selects, from among subcarriers 1 through 24, subcarriers whose CSI is to be fed back to the CSI receiving apparatus according to a CSI frame type input from CSI transmission control section 39 and the classification results shown in FIG.31 stored in classification result memory 389, and generates a CSI frame. CSI frame generation section 386 operates as shown in FIG.32. In the example shown in FIG.32, the CSI transmitting apparatus periodically feeds back three types of CSI frame to the CSI receiving apparatus according to the above-mentioned classification results. Of the three types of CSI frame - CSI1 through CSI3 - CSI1 is a CSI frame comprising SNR values of group 1 (subcarriers 1, 3, 4, 10, 12, 14, 21, and 23), CSI2 is a CSI frame comprising SNR values of group 2 (subcarriers 2, 5, 6, 9, 13, 15, 20, and 24), and CSI3 is a CSI frame comprising SNR values of group 3 (subcarriers 7, 8, 11, 16, 17, 18, 19, and 22).

In FIG.32, first, a generation timing signal is input to CSI frame generation section 386 from CSI transmission control section 39 at timing t₄ₙ. At the same time, an update timing signal is input to classification result memory 389, and therefore the contents of classification result memory 389 are updated with the classification results newly obtained by classification section 388. After updating, the contents of classification result memory 389 are now assumed to be as shown in FIG.31. Also, a signal indicating "CSI1+CSI2+CSI3" as the CSI frame type is input to CSI frame generation section 386 from CSI transmission control section 39, and therefore CSI frame generation section 386 generates a CSI frame (CSI1+CSI2+CSI3) containing the SNR values of all of subcarriers 1 through 24 in accordance with the indicated CSI frame type. The frame format is shown in FIG.9.

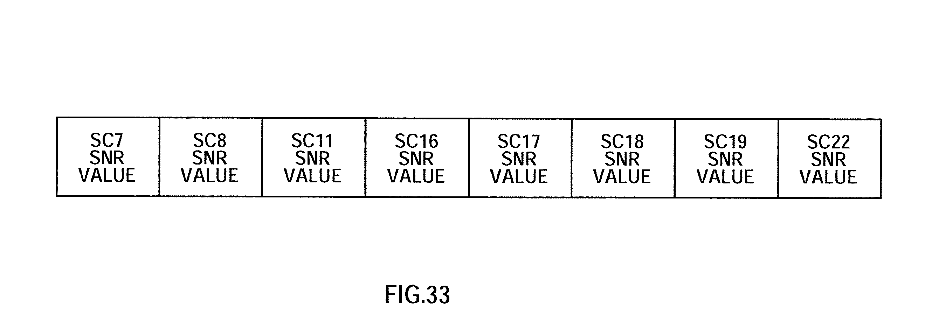

Next, at timing t₄ₙ₊₁, a generation timing signal is input to CSI frame generation section 386 from CSI transmission control section 39 in the same way as at timing t₄ₙ. However, an update timing signal is not input to classification result memory 389, and therefore classification result memory 389 is not updated. The contents of classification result memory 389 thus remain as shown in FIG.31. As a signal indicating "CSI3" as the CSI frame type is input to CSI frame generation section 386 from CSI transmission control section 39, CSI frame generation section 386 generates a CSI frame (CSI3) comprising the SNR values of group 3 subcarriers 7, 8, 11, 16, 17, 18, 19, and 22 in accordance with the indicated CSI frame type. By this means, the CSI transmitting apparatus can feed back the CSI of group 3 subcarriers whose SNR values are smallest (that is, whose SNR variation amounts are largest) to the CSI receiving apparatus at timing t₄ₙ₊₁. The frame format is as shown in FIG.33, the same as in FIG.18.

Next, at timing t₄ₙ₊₂, in the same way as at timing t₄ₙ₊₁, a generation timing signal is input to CSI frame generation section 386 from CSI transmission control section 39, but an update timing signal is not input to classification result memory 389, and therefore classification result memory 389 is not updated. The contents of classification result memory 389 thus remain as shown in FIG.31. As a signal indicating "CSI2+CSI3" as the CSI frame type is input to CSI frame generation section 386 from CSI transmission control section 39, CSI frame generation section 386 generates a CSI frame (CSI2+CSI3) comprising the SNR values of group 2 subcarriers 2, 5, 6, 9, 13, 15, 20, and 24 and group 3 subcarriers 7, 8, 11, 16, 17, 18, 19, and 22 in accordance with the indicated CSI frame type. By this means, the CSI transmitting apparatus can feed back the CSI of only group 2 and group 3 subcarriers to the CSI receiving apparatus at timing t₄ₙ₊₂. The frame format is the same as that shown in FIG.18 and FIG.33.

Next, at timing t₄ₙ₊₃, the same kind of processing is performed as at timing t₄ₙ₊₁, and at timing t₄₍ₙ₊₁₎, the same kind of processing is performed as at timing t₄ₙ. Thus, in the example shown in FIG.32, CSI1 transmission period (feedback period) 107 is four times as long as CSI3 transmission period (feedback period) 105, and CSI2 transmission period (feedback period) 106 is twice as long as CSI3 transmission period 105. CSI1 transmission period 107 is twice as long as CSI2 transmission period 106. By making the CSI1 and CSI2 transmission periods an integral multiple of the CSI3 transmission period in this way, when feeding back CSI of all subcarriers (in FIG.32, at timings t₄ₙ and t₄₍ₙ₊₁₎), the CSI can be transmitted together in one frame, allowing header information and so forth to be shared, and as a result enabling the amount of data necessary for the transmission of feedback information to be reduced.

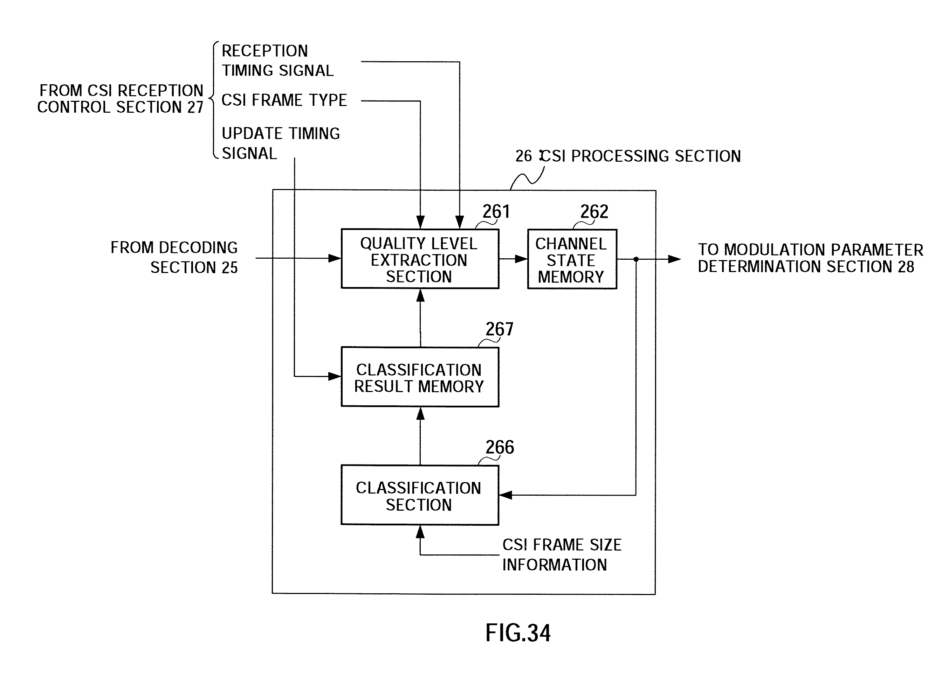

Next, the configuration of CSI processing section 26 according to this embodiment will be described using FIG.34. As shown in FIG.34, CSI processing section 26 according to this embodiment is equipped with a classification section 266 and classification result memory 267 in addition to the configuration elements of CSI processing section 26 according to Embodiment 1 (FIG.12).

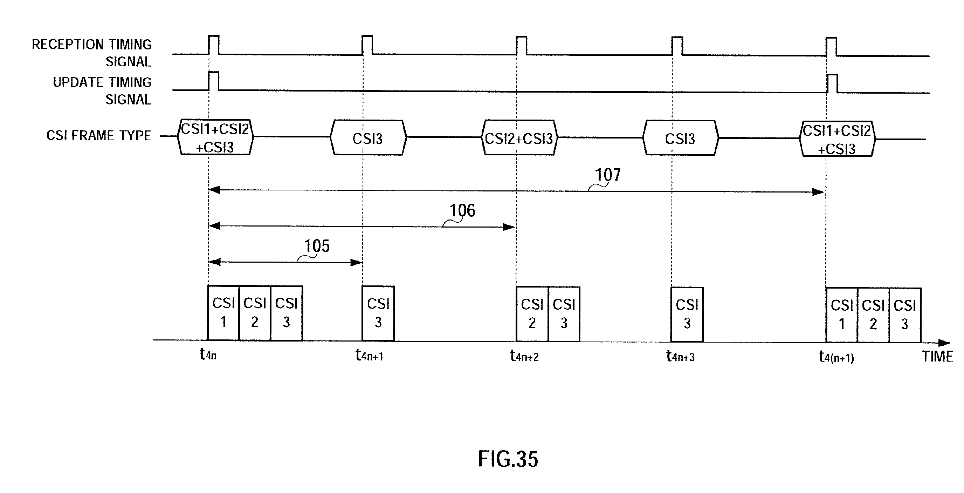

CSI processing section 26 shown in FIG. 34 operates as shown in FIG.35 with respect to the operation of CSI frame generation section 386 shown in FIG.29.

That is to say, first, a reception timing signal is input to quality level extraction section 261 from CSI reception control section 27 at timing t₄ₙ. Also, a signal indicating "CSI1+CSI2+CSI3" as the CSI frame type is input to quality level extraction section 261 from CSI reception control section 27. Therefore, quality level extraction section 261 receives a CSI frame shown in FIG.9 - that is, a CSI frame (CSI1+CSI2+CSI3) containing SNR values of all of subcarriers 1 through 24. Then quality level extraction section 261 extracts the SNR values of subcarriers 1 through 24 from the CSI frame, adds the corresponding subcarrier numbers to the SNR values, and outputs them to channel state memory 262. Channel state memory 262 updates the SNR values of all subcarriers.

At timing t4ₙ, an update timing signal is input to classification result memory 267, and therefore classification result memory 267 updates the held classification results with the classification results obtained by means of classification section 266 at timing t4ₙ. The classification method used by classification section 266 is the same as that used by classification section 388 of the CSI transmitting apparatus. By means of this processing, the contents of classification result memory 389 of the CSI transmitting apparatus and the contents of classification result memory 267 of the CSI receiving apparatus at timing t₄ₙ can be synchronized.

Next, at timing t₄ₙ₊₁, a reception timing signal is input to quality level extraction section 261 from CSI reception control section 27 in the same way as at timing t₄ₙ. Also, a signal indicating "CSI3" as the CSI frame type is input to quality level extraction section 261 from CSI reception control section 27. However, an update timing signal is not input to classification result memory 267, and therefore classification result memory 267 is not updated at timing t₄ₙ₊₁, but remains in the state to which it was updated at t₄ₙ.

Quality level extraction section 261 receives a CSI frame shown in FIG.33 - that is, a CSI frame (CSI3) comprising the SNR values of group 3 subcarriers 7, 8, 11, 16, 17, 18, 19, and 22. Then quality level extraction section 261 extracts the SNR values of subcarriers 7, 8, 11, 16, 17, 18, 19, and 22 from CSI3, and furthermore references classification result memory 267 and acquires the subcarrier numbers of the group 3 subcarriers from classification result memory 267. Quality level extraction section 261 then adds the corresponding subcarrier numbers to the extracted SNR values, and outputs them to channel state memory 262.

In the example shown in FIG.33, the SNR values of group 3 subcarriers 7, 8, 11, 16, 17, 18, 19, and 22 are arranged in ascending subcarrier number order. Subcarrier numbers are not included. By agreeing beforehand between the CSI transmitting apparatus and the CSI receiving apparatus that SNR values are to be arranged in ascending (or descending) subcarrier number order in this way, the subcarrier number corresponding to each SNR value can be identified in common by both without sending subcarrier numbers contained in a CSI frame. Thus, since it is no longer necessary to send subcarrier numbers contained in a CSI frame, the CSI3 data amount can be reduced.

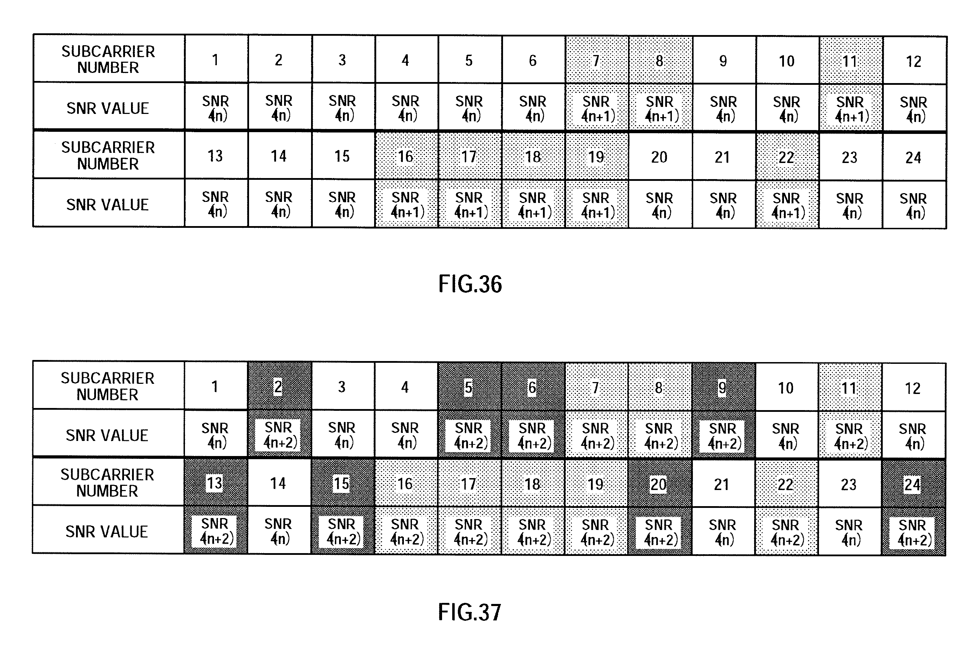

Channel state memory 262 updates SNR values corresponding to subcarrier numbers input from quality level extraction section 261. That is to say, channel state memory 262 updates only the SNR values of subcarriers 7, 8, 11, 16, 17, 18, 19, and 22 from among subcarriers 1 through 24. As a result, the state of channel state memory 262 after updating at timing t₄ₙ₊₁ is as shown in FIG.36. By means of this processing, the contents of channel state memory 382 of the CSI transmitting apparatus and the contents of channel state memory 262 of the CSI receiving apparatus at timing t₄ₙ₊₁ can be synchronized.

Next, at timing t₄ₙ₊₂, a reception timing signal is input to quality level extraction section 261 from CSI reception control section 27. Also, a signal indicating "CSI2+CSI3" as the CSI frame type is input to quality level extraction section 261 from CSI reception control section 27. However, an update timing signal is not input to classification result memory 267, and therefore classification result memory 267 is not updated at timing t₄ₙ₊₂, but remains in the state to which it was updated at t₄ₙ.

Quality level extraction section 261 receives a CSI frame with the same kind of frame format as shown in FIG.33 - that is, a CSI frame (CSI2+CSI3) comprising the SNR values of group 2 subcarriers 2, 5, 6, 9, 13, 15, 20, and 24 and the SNR values of group 3 subcarriers 7, 8, 11, 16, 17, 18, 19, and 22. Then quality level extraction section 261 extracts the SNR values of subcarriers 2, 5, 6, 9, 13, 15, 20, and 24 from CSI2 and extracts the SNR values of subcarriers 7, 8, 11, 16, 17, 18, 19, and 22 from CSI3, and furthermore references classification result memory 267 and acquires the subcarrier numbers of the group 2 and 3 subcarriers from classification result memory 267. Quality level extraction section 261 then adds the corresponding subcarrier numbers to the extracted SNR values, and outputs them to channel state memory 262.

Channel state memory 262 updates SNR values corresponding to subcarrier numbers input from quality level extraction section 261. That is to say, channel state memory 262 updates only the SNR values of group 2 subcarriers 2, 5, 6, 9, 13, 15, 20, and 24 and the SNR values of group 3 subcarriers 7, 8, 11, 16, 17, 18, 19, and 22 from among subcarriers 1 through 24. As a result, the state of channel state memory 262 after updating at timing t₄ₙ₊₂ is as shown in FIG.37. By means of this processing, the contents of channel state memory 382 of the CSI transmitting apparatus and the contents of channel state memory 262 of the CSI receiving apparatus at timing t₄ₙ₊₂ can be synchronized.

Next, at timing t₄ₙ₊₃, the same kind of processing is performed as at timing t₄ₙ₊₁, and at timing t₄₍ₙ₊₁₎, the same kind of processing is performed as at timing t₄ₙ.

Thus, according to this embodiment, a plurality of subcarriers composing an OFDM symbol are classified into a plurality of groups according to CSI frame size, enabling the CSI feedback period to be varied over a plurality of stages according to the channel state time variation amount in a communication system in which the CSI frame size is fixed or predetermined as limited to several types. Also, since it is not necessary to include subcarrier numbers or subcarrier classification results in a CSI frame fed back to a CSI receiving apparatus from a CSI transmitting apparatus, the amount of data in feedback information can be further reduced in the same way as in Embodiment 3.

In this embodiment, SNRvaluestransmittedinCSI3 are small SNR values, and therefore the transmission rate of group 3 subcarriers 7, 8, 11, 16, 17, 18, 19, and 22 whereby SNR values are fed back by CSI3 is low. On the other hand, the amount of variation of SNR values transmitted in CSI3 is large, and therefore short-period feedback is necessary for CSI3. Thus, when CSI3 overhead is large with respect to the transmission rate of subcarriers whereby CSI feedback is performed by CSI3, CSI3 transmission may be omitted. That is to say, when SNR values (or SNR value variation amounts) of a plurality of subcarriers are classified into a plurality of groups according to size, feedback of the group with the smallest SNR values (or largest SNR value variation amounts) may be omitted.

### (Embodiment 5)

This embodiment differs from Embodiment 4 in that, at timing at which CSI of all of subcarriers 1 through 24 composing an OFDM symbol is transmitted, the difference in SNR values between adjacent subcarriers is transmitted as CSI, and at timing at which CSI of some subcarriers is transmitted, the difference in SNR values in the same subcarrier at different timings is transmitted as CSI. Only differences from Embodiment 4 are described below.

First, the operation of CSI frame generation section 386 according to this embodiment will be described, again using FIG.32.

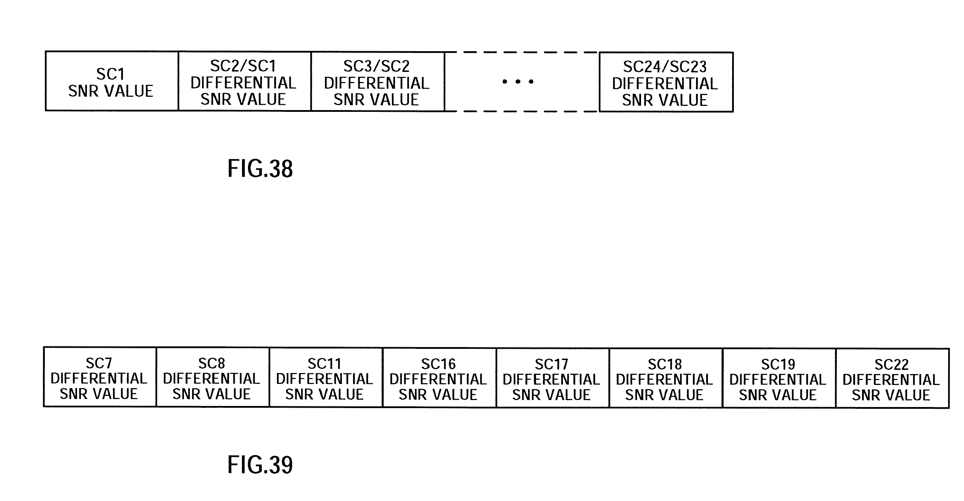

In FIG.32, at timing t₄ₙ, CSI frame generation section 386 generates a CSI frame (CSI1+CSI2+CSI3) containing CSI of all of subcarriers 1 through 24. At timing t₄ₙ₊₁, CSI frame generation section 386 finds the differences in SNR value between adjacent subcarriers (differential SNR values) Δγ_{m,4n} from the SNR values of all subcarriers held in channel state memory 382, and generates a CSI frame (CSI1+CSI2+CSI3) comprising these differential SNR values. The timing t₄ₙ frame format is shown in FIG.38. That is to say, at timing t₄ₙ, the subcarrier 1 SNR value followed by the differential SNR value with respect to the adjacent subcarrier are transmitted as CSI. Differential SNR value Δγ_{m,4n} at timing t₄ₙ can be expressed as shown in Equation (5) below. In Equation (5), γ_{m,4n} represents a value (in [dB] units) resulting from logarithmic transformation of the SNR value of the m'th subcarrier at timing t₄ₙ. ${Δ \begin{matrix}\end{matrix} γ}_{m , 4 ⁢ n} = \left\{\begin{matrix}{γ}_{1 , 4 ⁢ n} & , m = 1 \\ {γ}_{m , 4 ⁢ n} - {γ}_{m - 1 , 4 ⁢ n} & , m \neq 1\end{matrix}\right\}$

Next, at timing t₄ₙ₊₁, CSI frame generation section 386 finds the differences in SNR value (differential SNR values) between timing t₄ₙ₊₁ and timing t₄ₙ, Δγ_{m,4n+1}, for group 3 subcarriers 7, 8, 11, 16, 17, 18, 19, and 22, and generates a CSI frame (CSI3) comprising these differential SNR values Δγ_{m,4n+1}. The timing t₄ₙ₊₁ frame format is shown in FIG.39. Differential SNRvalue Δγ_{m,4n+1} at timing t₄ₙ₊₁ can be expressed as shown in Equation (6) below. ${Δ \begin{matrix}\end{matrix} γ}_{m , 4 ⁢ n + 1} = {γ}_{m , 4 ⁢ n + 1} - {γ}_{m , 4 ⁢ n}$

Next, at timing t₄ₙ₊₂, CSI frame generation section 386 finds the differences in SNR value (differential SNR values) between timing t₄ₙ₊₂ and timing t₄ₙ, Δγ_{k,4n+2}, for group 2 subcarriers 2, 5, 6, 9, 13, 15, 20, and 24, and also finds the differences in SNR value (differential SNR values) between timing t₄ₙ₊₂ and timing t₄ₙ₊₁, Δγ_{m,4n+2}, for group 3 subcarriers 7, 8, 11, 16, 17, 18, 19, and 22, and generates a CSI frame (CSI2+CSI3) comprising these differential SNR values. The timing t₄ₙ₊₂ frame format is the same as in FIG.39. Differential SNR values Δγ_{k,4n+2} and Δγ_{m,4n+2} at timing t₄ₙ₊₂ can be expressed as shown in Equations (7) and (8) below. In Equation (7), γ_{k,4n} represents a value (in [dB] units) resulting from logarithmic transformation of the SNR value of the k'th subcarrier at timing t₄ₙ. ${Δ \begin{matrix}\end{matrix} γ}_{k , 4 ⁢ n + 2} = {γ}_{k , 4 ⁢ n + 2} - {γ}_{k , 4 ⁢ n}$ ${Δ \begin{matrix}\end{matrix} γ}_{m , 4 ⁢ n + 2} = {γ}_{m , 4 ⁢ n + 2} - {γ}_{m , 4 ⁢ n + 1}$

Next, at timing t₄ₙ₊₃, the same kind of processing is performed as at timing t₄ₙ₊₁, and at timing t₄₍ₙ₊₁₎, the same kind of processing is performed as at timing t₄ₙ.

The operation of quality level extraction section 261 according to this embodiment will now be described, again using FIG. 35. Quality level extraction section 261 according to this embodiment operates as shown in FIG.35 with respect to the operation of CSI frame generation section 386.

That is to say, at timing t₄ₙ, quality level extraction section 261 receives a CSI frame (CSI1+CSI2+CSI3) shown in FIG.38. Then quality level extraction section 261 extracts the SNR value of subcarrier 1, and the differential SNR value with respect to the adjacent subcarrier, Δγ_{m,4n}, from the CSI frame, performs the addition processing shown in Equation (9) and finds SNR value γ_{m,4n} of each of subcarriers 1 through 24, adds the corresponding subcarrier numbers, and outputs the results to channel state memory 262. ${\begin{matrix}\end{matrix} γ}_{m , 4 ⁢ n} = \left\{\begin{matrix}{γ}_{1 , 4 ⁢ n} & , m = 1 \\ {γ}_{m - 1 , 4 ⁢ n} + {γ}_{m , 4 ⁢ n} & , m \neq 1\end{matrix}\right\}$

Next, at timing t₄ₙ₊₁, quality level extraction section 261 receives a CSI frame (CSI3) shown in FIG.33. Then quality level extraction section 261 extracts differential SNR values Δγ_{m,4n+1} for group 3 subcarriers 7, 8, 11, 16, 17, 18, 19, and 22 from the CSI frame, performs the addition processing shown in Equation (10) and finds SNR value γ_{m,4n+1} of each of subcarriers 7, 8, 11, 16, 17, 18, 19, and 22, and also references classification result memory 267 and acquires the subcarrier numbers of group 3 subcarriers from classification result memory 267. Then quality level extraction section 261 adds the corresponding subcarrier numbers to the found SNR values γ_{m,4n+1}, and outputs them to channel state memory 262. ${\begin{matrix}\end{matrix} γ}_{m , 4 ⁢ n + 1} = {γ}_{m , 4 ⁢ n} + Δ ⁢ {γ}_{m , 4 ⁢ n + 1}$

Next, at timing t₄ₙ₊₂, quality level extraction section 261 receives a CSI frame (CSI2+CSI3) with the same kind of frame format as in FIG. 39. Then quality level extraction section 261 extracts differential SNR values Δγ_{k,4n+2} for group 2 subcarriers 2, 5, 6, 9, 13, 15, 20, and 24, and also extracts differential SNR values Δγ_{m,4n+2} for group 3 subcarriers 7, 8, 11, 16, 17, 18, 19, and 22, from the CSI frame. Quality level extraction section 261 then performs the addition processing shown in Equation (11) and finds SNR value γ_{k,4n+2} of each of subcarriers 2, 5, 6, 9, 13, 15, 20, and 24, performs the addition processing shown in Equation (12) and finds SNR value γ_{m,4n+2} of each of subcarriers 7, 8, 11, 16, 17, 18, 19, and 22, and also references classification result memory 267 and acquires the subcarrier numbers of group 2 and 3 subcarriers from classification result memory 267. Then quality level extraction section 261 adds the corresponding subcarrier numbers to the found SNR values γ_{k,4n+2} and γ_{m,4n+2}, and outputs them to channel state memory 262. ${\begin{matrix}\end{matrix} γ}_{k , 4 ⁢ n + 2} = {γ}_{k , 4 ⁢ n} + Δ ⁢ {γ}_{k , 4 ⁢ n + 2}$ ${γ}_{m , 4 ⁢ n + 2} = {γ}_{m , 4 ⁢ n + 1} + Δ ⁢ {γ}_{m , 4 ⁢ n + 2}$

Next, at timing t₄ₙ₊₃, the same kind of processing is performed as at timing t₄ₙ₊₁, and at timing t₄₍ₙ₊₁₎, the same kind of processing is performed as at timing t₄ₙ.

Thus, according to this embodiment, differences in SNR value are transmitted as CSI, enabling the amount of data in feedback information to be further reduced. Also, at timings t₄ₙ and t₄₍ₙ₊₁₎ at which CSI of all of subcarriers 1 through 24 is transmitted, differences in SNR value between adjacent subcarriers are transmitted as CSI, so that even if a transmission error occurs in CSI2 or CSI3 at timings t₄ₙ₊₁ through t₄ₙ₊₃, it is possible to prevent propagation of that error in the CSI of timing t₄₍ₙ₊₁₎ onward.

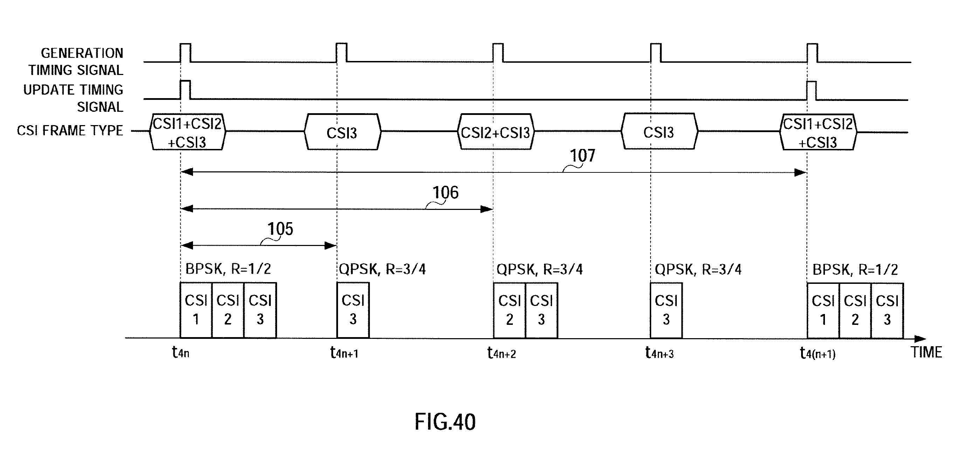

Thus, in this embodiment, a CSI frame (CSI1+CSI2+CSI3) containing CSI of all of subcarriers 1 through 24 is an important CSI frame for preventing the propagation of transmission errors, and it is therefore important that transmission errors do not occur in this CSI frame. Therefore, in this embodiment, error tolerance may be improved by having coding section 41 and modulation section 42 shown in FIG.2 use a smaller coding rate R and a lower modulation level at timings t₄ₙ and t₄₍ₙ₊₁₎ than at other timings t₄ₙ₊₁ through t₄ₙ₊₃, as shown in FIG.40.

### (Embodiment 6)

This embodiment differs from Embodiment 4 in that, when a plurality of subcarriers (here, subcarriers 1 through 24) composing an OFDM symbol are classified into a plurality of groups based on SNR, transmissions of CSI of a group for which the SNR value is less than a predetermined threshold value are omitted. In the following description, a case is described by way of example in which, as in Embodiment 4, subcarriers 1 through 24 are classified into three groups.

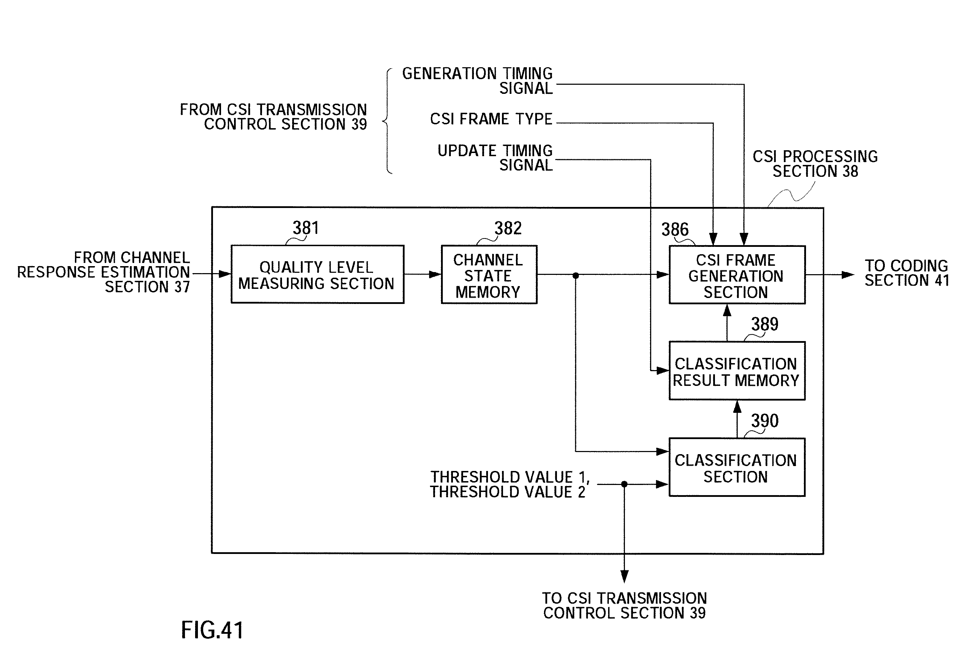

The configuration of CSI processing section 38 according to this embodiment will now be described using FIG.41. In FIG.41, two threshold values, threshold values 1 and 2 (where threshold value 1 > threshold value 2), are input to a classification section 390 and CSI transmission control section 39. Configurationelements in FIG.41 identical to those in Embodiment 4 (FIG.29) are assigned the same codes as in FIG.29, and descriptions thereof are omitted.

Classification section 390 compares per-subcarrier SNR values stored in channel state memory 382 with threshold values 1 and 2, and classifies subcarriers 1 through 24 into three groups according to the comparison results. Classification section 390 classifies subcarriers whose SNR value is greater than or equal to threshold value 1 as group 1 subcarriers, classifies subcarriers whose SNR value is greater than or equal to threshold value 2 and less than threshold value 1 as group 2 subcarriers, and classifies subcarriers whose SNR value is less than threshold value 2 as group 3 subcarriers.

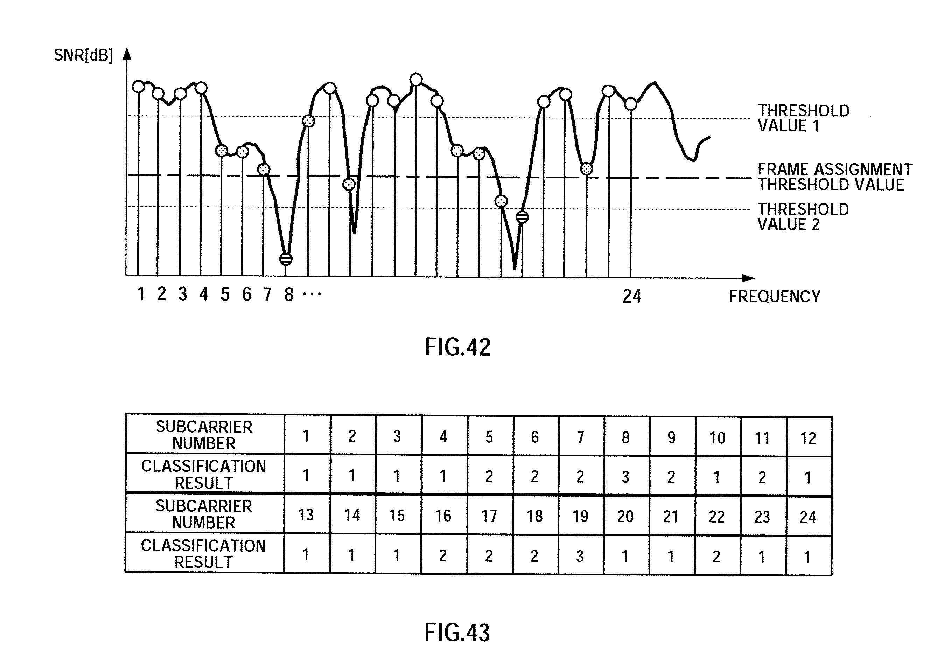

An actual example of classification by classification section 390 is shown in FIG.42. When the SNR values of subcarriers 1 through 24 are as shown in FIG.42, classification section 390 classifies subcarriers 1 through 24 into three groups - groups 1, 2, and 3 - according to threshold values 1 and 2. As a result, subcarriers 1, 2, 3, 4, 10, 12, 13, 14, 15, 20, 21, 23, and 24 are classified into group 1, subcarriers 5, 6, 7, 9, 11, 16, 17, 18, and 22 are classified into group 2, and subcarriers 8 and 19 are classified into group 3. These classification results are stored in classification result memory 389 as shown in FIG.43.

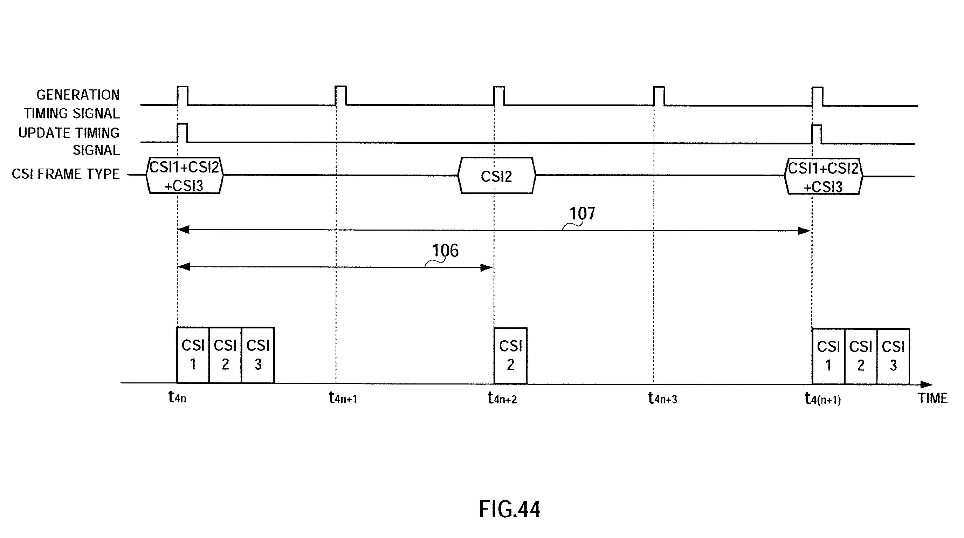

At the timing at which a generation timing signal is input from CSI transmission control section 39, CSI frame generation section 386 selects, from among subcarriers 1 through 24, subcarriers whose CSI is to be fed back to the CSI receiving apparatus according to a CSI frame type input from CSI transmission control section 39 and the classification results shown in FIG.43 stored in classification result memory 389, and generates a CSI frame. CSI frame generation section 386 operates as shown in FIG.44. In the example shown in FIG.44, the CSI transmitting apparatus periodically feeds back three types of CSI frame to the CSI receiving apparatus according to the above-mentioned classification results. Of the three types of CSI frame - CSI1 through CSI3 - CSI1 is a CSI frame comprising SNR values of group 1 (subcarriers 1, 2, 3, 4, 10, 12, 13, 14, 15, 20, 21, 23, and 24), CSI2 is a CSI frame comprising SNRvalues of group 2 (subcarriers 5, 6, 7, 9, 11, 16, 17, 18, and 22), and CSI3 is a CSI frame comprising SNR values of group 3 (subcarriers 8 and 19).

Threshold values 1 and 2 are input to CSI transmission control section 39, and the frame assignment threshold value shown in FIG. 42 is also set therein (where threshold value 2 ≤ frame assignment threshold value < threshold value 1). Then CSI transmission control section 39 and CSI frame generation section 386 operate as shown in FIG.44, and transmissions of a CSI frame (that is, CSI3) comprising SNR values of a group (that is, group 3) whose SNR values are lower than the threshold value that is less than or equal to the frame assignment threshold value (that is, threshold value 2) are omitted.

In FIG.44, first, a generation timing signal is input to CSI frame generation section 386 from CSI transmission control section 39 at timing t₄ₙ. At the same time, an update timing signal is input to classification result memory 389, and therefore the contents of classification result memory 389 are updated with the classification results newly obtained by classification section 390. After updating, the contents of classification result memory 389 are now assumed to be as shown in FIG.43. Also, a signal indicating "CSI1+CSI2+CSI3" as the CSI frame type is input to CSI frame generation section 386 from CSI transmission control section 39, and therefore CSI frame generation section 386 generates a CSI frame (CSI1+CSI2+CSI3) containing the SNR values of all of subcarriers 1 through 24 in accordance with the indicated CSI frame type.

Next, at timing t₄ₙ₊₁, a generation timing signal is input to CSI frame generation section 386 from CSI transmission control section 39. However, an update timing signal is not input to classification result memory 389, and therefore classification result memory 389 is not updated. The contents of classification result memory 389 thus remain as shown in FIG.43. Also, a signal indicating the CSI frame type is not input to CSI frame generation section 386 from CSI transmission control section 39 at timing t₄ₙ₊₁. Therefore, in this embodiment, CSI frame generation section 386 does not generate CSI3 generated at timing t₄ₙ₊₁ in Embodiment 4. In this way, CSI3 transmissions are skipped in this embodiment.

Next, at timing t₄ₙ₊₂, a generation timing signal is input to CSI frame generation section 386 from CSI transmission control section 39, but an update timing signal is not input to classification result memory 389, and therefore classification result memory 389 is not updated. The contents of classification result memory 389 thus remain as shown in FIG. 43. As a signal indicating "CSI2" as the CSI frame type is input to CSI frame generation section 386 from CSI transmission control section 39, CSI frame generation section 386 generates a CSI frame (CSI2) comprising the SNR values of group 2 subcarriers 5, 6, 7, 9, 11, 16, 17, 18, and 22 in accordance with the indicated CSI frame type. That is to say, in this embodiment, at timing t₄ₙ₊₂ CSI frame generation section 386 does not generate CSI3 generated at timing t₄ₙ₊₂ in Embodiment 4.

Next, at timing t₄ₙ₊₃, the same kind of processing is performed as at timing t₄ₙ₊₁, and at timing t₄₍ₙ₊₁₎, the same kind of processing is performed as at timing t₄ₙ. As shown in FIG.44, as a result of CSI3 transmission not being performed at timings t₄ₙ₊₁, t₄ₙ₊₂, and t₄ₙ₊₃ in this way, CSI3 transmission period (feedback period) 107 is twice as long as CSI2 transmission period (feedback period) 105, the same as CSI1 transmission period (feedback period) 107.

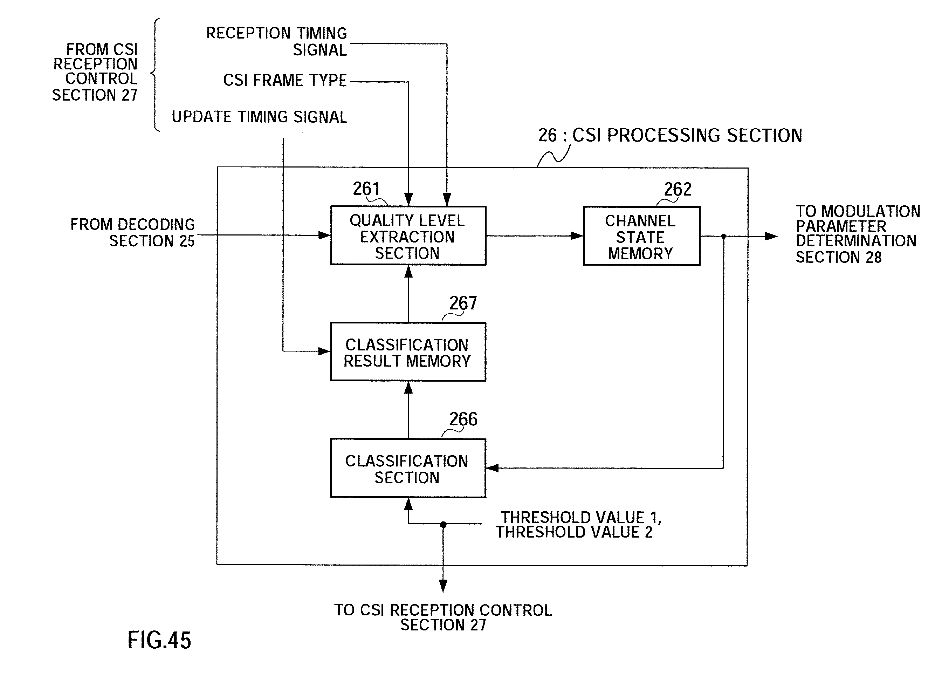

Next, the configuration of CSI processing section 26 according to this embodiment will be described using FIG.45. Configuration elements in FIG.45 identical to those in Embodiment 4 (FIG.34) are assigned the same codes as in FIG.34, and descriptions thereof are omitted.

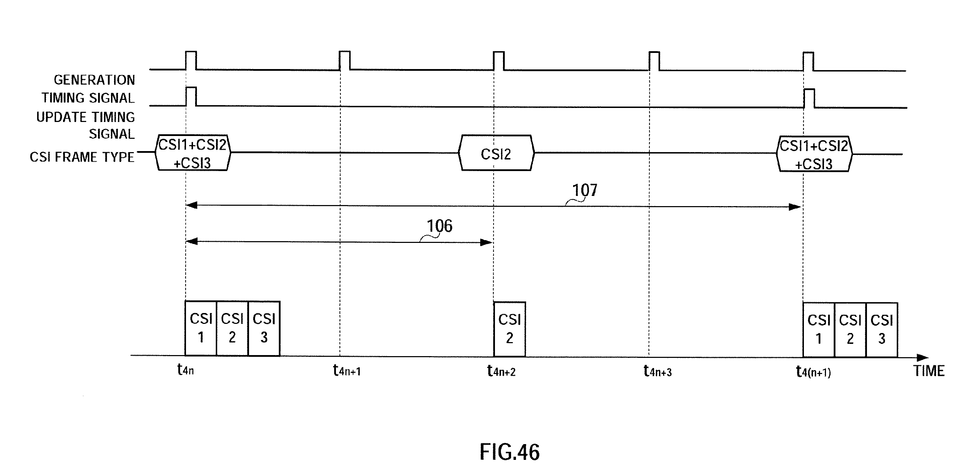

CSI processing section 26 shown in FIG. 45 operates as shown in FIG.46 with respect to the operation of CSI frame generation section 386 shown in FIG.41.

That is to say, first, a reception timing signal is input to quality level extraction section 261 from CSI reception control section 27 at timing t₄ₙ. Also, a signal indicating "CSI1+CSI2+CSI3" as the CSI frame type is input to quality level extraction section 261 from CSI reception control section 27. Therefore, quality level extraction section 261 receives a CSI frame (CSI1+CSI2+CSI3) containing SNR values of all of subcarriers 1 through 24. Then quality level extraction section 261 extracts the SNR values of subcarriers 1 through 24 from the CSI frame, adds the corresponding subcarrier numbers, and outputs the results to channel state memory 262. Channel state memory 262 updates the SNR values of all subcarriers.

At timing t₄ₙ, an update timing signal is input to classification result memory 267, and therefore classification result memory 267 updates the held classification results with the classification results obtained by means of classification section 266 at timing t₄ₙ. The classification method used by classification section 266 is the same as that used by classification section 390 of the CSI transmitting apparatus. By means of this processing, the contents of classification result memory 389 of the CSI transmitting apparatus and the contents of classification result memory 267 of the CSI receiving apparatus at timing t₄ₙ can be synchronized.

Next, at timing t₄ₙ₊₁, a reception timing signal is input to quality level extraction section 261 from CSI reception control section 27. However, an update timing signal is not input to classification result memory 267, and therefore classification result memory 267 is not updated at timing t₄ₙ₊₁, but remains in the state to which it was updated at t₄ₙ. Also, a signal indicating the CSI frame type is not input to CSI frame generation section 386 from CSI reception control section 27 at timing t₄ₙ₊₁. Therefore, quality level extraction section 261 does not receive CSI3 received at timing t₄ₙ₊₁ in Embodiment 4.

Next, at timing t₄ₙ₊₂, a reception timing signal is input to quality level extraction section 261 from CSI reception control section 27. Also, a signal indicating "CSI2" as the CSI frame type is input to quality level extraction section 261 from CSI reception control section 27. However, an update timing signal is not input to classification result memory 267, and therefore classification result memory 267 is not updated at timing t₄ₙ₊₂, but remains in the state to which it was updated at t₄ₙ.

Quality level extraction section 261 receives a CSI frame (CSI2) comprising the SNR values of group 2 subcarriers 5, 6, 7, 9, 11, 16, 17, 18, and 22. Then quality level extraction section 261 extracts the SNR values of subcarriers 5, 6, 7, 9, 11, 16, 17, 18, and 22 from CSI2, and furthermore references classification result memory 267 and acquires the subcarrier numbers of the group 2 subcarriers from classification result memory 267. Quality level extraction section 261 then adds the corresponding subcarrier numbers to the extracted SNR values, and outputs them to channel state memory 262.

Channel state memory 262 updates SNR values corresponding to subcarrier numbers input from quality level extraction section 261. That is to say, channel state memory 262 updates only the SNR values of group 2 subcarriers 5, 6, 7, 9, 11, 16, 17, 18, and 22 from among subcarriers 1 through 24. By means of this processing, the contents of channel state memory 382 of the CSI transmitting apparatus and the contents of channel state memory 262 of the CSI receiving apparatus at timing t₄ₙ₊₂ can be synchronized.

Next, at timing t₄ₙ₊₃, the same kind of processing is performed as at timing t₄ₙ₊₁, and at timing t₄₍ₙ₊₁₎, the same kind of processing is performed as at timing t₄ₙ.

Provision may also be made for a generation timing signal and reception timing signal not to be input to CSI frame generation section 386 and quality level extraction section 261 at timings t₄ₙ₊₁ and t₄ₙ₊₃ in FIG.44 and FIG.45.

Furthermore, threshold value 2 may also be used as the frame assignment threshold value.

Thus, according to this embodiment, transmissions of the CSI of a group below a predetermined threshold value are omitted, enabling the amount of feedback data of subcarriers that do not contribute to an improvement in throughput (here, subcarriers 8 and 19) to be reduced, and so enabling the amount of feedback data to be reduced without degrading throughput characteristics.

Some examples of frame assignment threshold value setting will now be given.

### <Setting Example 1>

A minimum reception SNR value or minimum received power value is set as the frame assignment threshold value. A minimum reception SNR value (minimum received power value) is a value indicating that communication is impossible with an SNR value (power value) lower than that value. Therefore, even if CSI of a subcarrier at or below that minimum reception SNR value (minimum received power value) is fed back, that subcarrier cannot be used for data transmission.

### <Setting Example 2>

A selection threshold value corresponding to the modulation method with the smallest modulation level (that is, the most robust modulation method) among a selectable plurality of modulation methods is set as the frame assignment threshold value. In a system in which even a subcarrier below the minimum reception SNR value is used for data transmission, subcarriers below a selection threshold value corresponding to the most robust modulation method all transmit using the most robust modulation method, and therefore frequent CSI feedback is not necessary.

### <Setting Example 3>

The frame assignment threshold value is set according to the time variation speed of a value comprising CSI (for example, an SNR value). For example, the time variation speed of an SNR value is in line with movement of a mobile station or movement of a peripheral object. Also, the higher the mobility of a mobile station, the shorter is the CSI feedback period. Moreover, with the present invention, as described above, the lower the SNR value, the shorter the feedback period is made. Also, feedback cannot be performed using a period shorter than the shortest feedback period permitted in a communication system. Thus, the frame assignment threshold value is set according to the SNR value time variation speed so that a CSI frame with a feedback period shorter than that shortest feedback period is not transmitted.

### <Setting Example 4>

The frame assignment threshold value is set according to the data transmission rate. For example, in a communication system in which a plurality of subcarriers are assigned to a plurality of mobile stations, such as an OFDMA system, many subcarriers are assigned to mobile stations with a high data transmission rate, and few subcarriers are assigned to mobile stations with a low data transmission rate. Thus, by setting the frame assignment threshold value low for a mobile station with a high data transmission rate, and setting the frame assignment threshold value high for a mobile station with a low data transmission rate, the number of subcarriers for which CSI is fed back can be controlled.

### (Embodiment 7)

This embodiment differs from Embodiment 3 in that an MCS (Modulation and Coding Scheme) value is used as CSI.

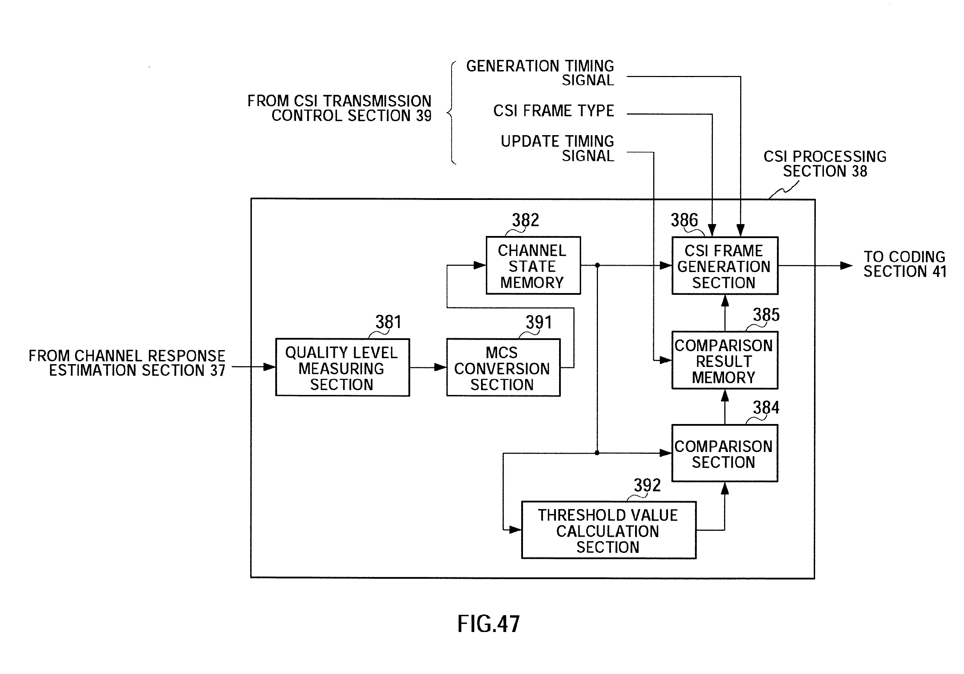

The configuration of CSI processing section 38 according to this embodiment will now be described using FIG.47. Configuration elements in FIG.47 identical to those in Embodiment 3 (FIG.23) are assigned the same codes as in FIG.23, and descriptions thereof are omitted.

Per-subcarrier SNR values measured by quality level measuring section 381 are input to an MCS conversion section 391.

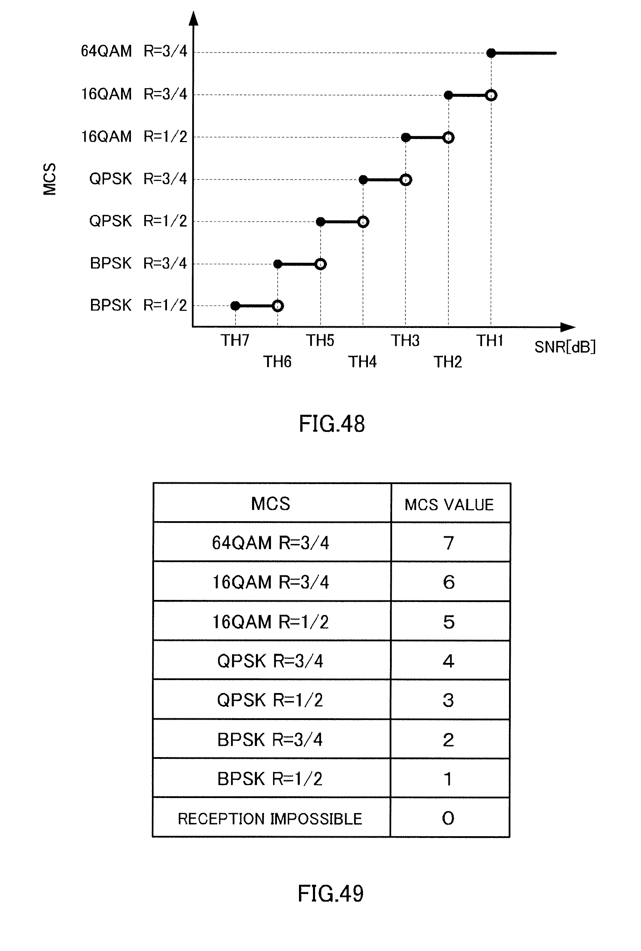

MCS conversion section 391 converts per-subcarrier SNR values to MCS values. Conversion from SNR values to MCS values is performed as shown in FIGS.48 and 49. That is to say, MCS conversion section 391 compares an SNR value with threshold values TH1 through TH7, and converts the SNR value to an MCS value 0 to 7 in accordance with the comparison result. Specifically, when an SNR value is in the range TH4 or above but less than TH3, for example, since the MCS corresponding to that SNR value in FIG.48 is QPSK, R=3/4, and the MCS value corresponding to the QPSK, R=3/4 MSC in FIG.49 is 4, MCS conversion section 391 converts that SNR value to an MCS value of 4. If an SNR value is less than TH7, reception is taken to be impossible, and that SNR value is converted to an MCS value of 0. Subcarrier MCS values obtained by conversion in this way are input to channel state memory 382.

Channel state memory 382 holds per-subcarrier MCS values input from MCS conversion section 391.

A threshold value calculation section 392 finds an average MCS value by averaging per-subcarrier MCS values stored in channel state memory 382 over all the subcarriers, and sets the comparison section 384 threshold value using that average MCS value. Details of threshold value calculation section 392 will be given later herein.

Comparison section 384 compares the threshold value calculated by threshold value calculation section 392 with per-subcarrier MCS values stored in channel state memory 382.

Comparison result memory 385 holds comparison section 384 comparison results on a subcarrier-by-subcarrier basis. Comparison result memory 385 stored contents are updated in accordance with an update timing signal input from CSI transmission control section 39.

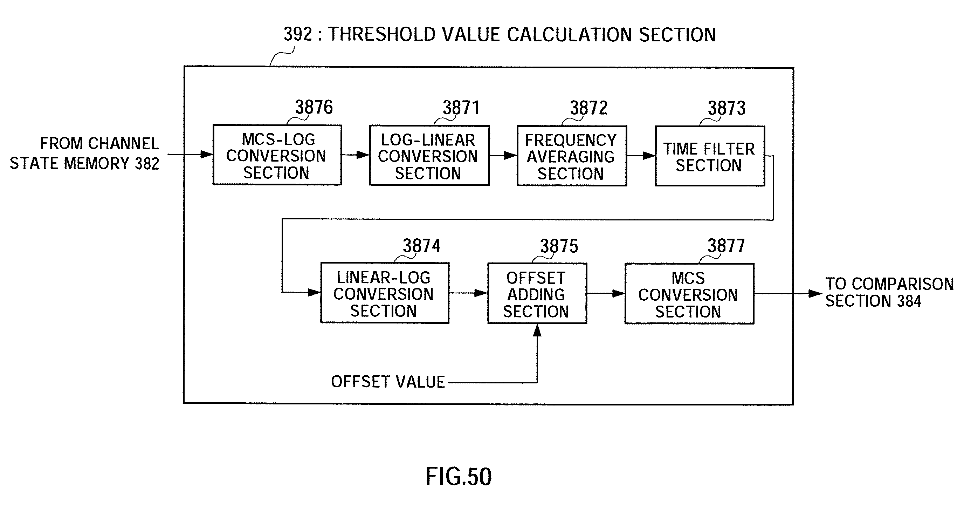

Next, threshold value calculation section 392 shown in FIG.47 will be described in detail using FIG.50. Configuration elements in FIG.50 identical to those in Embodiment 3 (FIG.24) are assigned the same codes as in FIG.24, and descriptions thereof are omitted.

An MCS-log conversion section 3876 converts per-subcarrier MCS values stored in channel state memory 382 to SNR values in accordance with FIGS.48 and 49. That is to say, MCS-log conversion section 3876 performs conversion that is the opposite of the conversion performed by MCS conversion section 391. Specifically, when an input MCS value is 4, for example, MCS-log conversion section 3876 converts that MCS value to a TH4-value SNR value. Here, the reason for converting an MCS value of 4 to a TH4-value SNR value rather than a TH3-value SNR value is to prevent the converted SNR value becoming higher than the actual SNR value measured by quality level measuring section 381 by performing conversion to lower limit TH4 among SNR values in the predetermined range in which the QPSK, R=3/4 MSC is selected (that is, the range TH4 or above but less than TH3). Per-subcarrier SNR values obtained by conversion in this way are input to log-linear conversion section 3871.

Through the same operations as MCS conversion section 391, an MCS conversion section 3877 converts an average SNR value [dB], input from offset adding section 3875 after offset addition, to anMCS value. By this means, the threshold value used in comparison section 384 is obtained.

Comparison section 384 then compares a per-subcarrier SNR value held in channel state memory 382 with the threshold value, and writes the comparison result to comparison result memory 385.

Processing from writing to comparison result memory 385 onward is the same as in Embodiment 3, and therefore a description thereof is omitted here. The CSI frame format according to this embodiment is as shown in FIG.9 and FIG.18, with "SNR value" replaced by "MCS value."

CSI processing section 26 according to this embodiment differs from that in Embodiment 3 (FIG.26) in that quality level extraction section 261 extracts MCS values, and threshold value calculation section 264 calculates an MCS value threshold value in the same way as threshold value calculation section 392. Other details of CSI processing section 26 are the same as in Embodiment 3, and therefore a description thereof is omitted.

It is also possible to set a plurality of threshold values by adding a plurality of different offsets to an average SNR value [dB] in offset adding section 3875, and to divide per-subcarrier MCS values into three or more groups. Subcarrier SNR values may be similarly divided into three or more groups in Embodiment 3.

Thus, according to this embodiment, MCS values of each subcarrier are transmitted as CSI, enabling the amount of data in feedback information to be reduced in comparison with a case in which SNR values are used. In particular, in a communication system in which adaptive modulation is performed, when the adaptively-modulated data receiving side decides the MCS and feeds this back to the transmitting side, this embodiment makes it possible for feedback necessary for adaptive modulation to be performed together with this, enabling feedback to be performed efficiently.

### (Embodiment 8)

In this embodiment, the values of threshold values, the number of threshold values, the threshold value interval, and the CSI frame transmission period are controlled appropriately using the channel response time variation amount, SNR value variance in the frequency domain (SNR variance), and an SNR average value for all subcarriers(average SNR value).

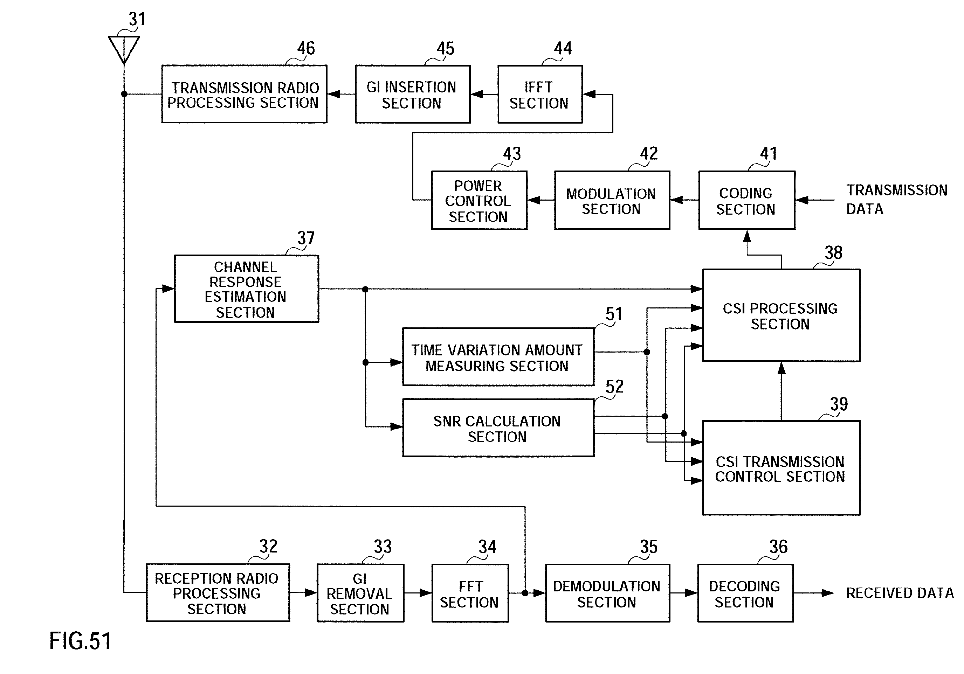

The configuration of a CSI transmitting apparatus according to this embodiment will now be described using FIG.51. Configuration elements in FIG.51 identical to those in Embodiment 1 (FIG.2) are assigned the same codes as in FIG.2, and descriptions thereof are omitted.

A time variation amount measuring section 51 measures the channel response time variation amount from per-subcarrier channel response values. Methods of monitoring fading variation in an orthogonal coordinate system and polar coordinate system are described in "Seiichi Sanpei 'Digital Wireless Transmission Technology - From Basics to System Design,' Pearson Education, September 2002, section 2.4.6 (pages 33-35)," for example. Thus, time variation amount measuring section 51 measures the channel response time variation amount as described below, for example.

### <Measurement Example 1>

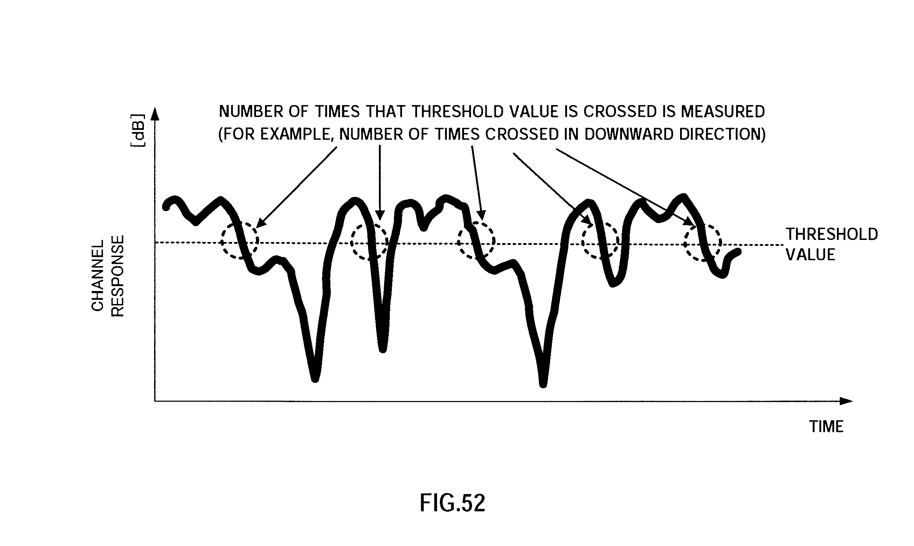

An example of channel response time variation amount measurement using a polar coordinate system is shown in FIG.52. As shown in FIG.52, time variation amount measuring section 51 sets a threshold value for variation of a channel response envelope, and measures the channel response time variation amount per unit time by measuring the number of times that variation crosses the threshold value in a downward direction (or measuring the number of times that variation crosses the threshold value in an upward direction) in a predetermined measurement period.

### <Measurement Example 2>

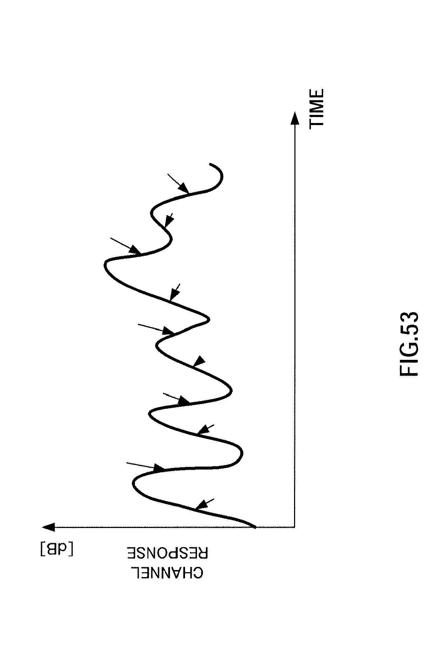

As shown in FIG.53, time variation amount measuring section 51 monitors time variation of an I-ch or Q-ch amplitude value, and measures the channel response time variation amount per unit time by measuring the number of times the direction (the sign of the differential value) of that variation changes per unit time.

### <Measurement Example 3>

Time variation amount measuring section 51 detects the maximum Doppler frequency, and measures the channel response time variation amount per unit time from the maximum Doppler frequency.

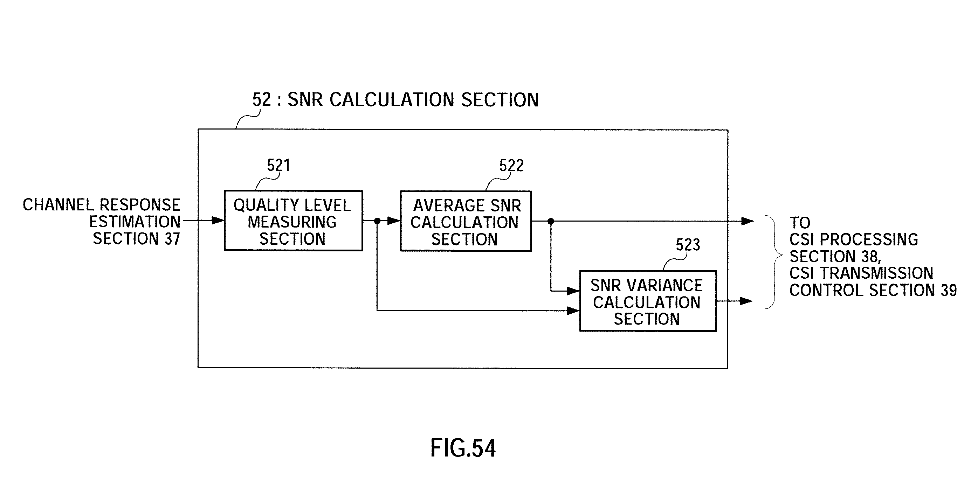

SNR calculation section 52 shown in FIG.51 has the configuration shown in FIG.54, and calculates an average SNR value and SNR variance.

In FIG.54, a quality level measuring section 521 measures the per-subcarrier SNR from a per-subcarrier channel response value input from channel response estimation section 37, in the same way as quality level measuring section 381 in Embodiment 1.

An average SNR calculation section 522 calculates the average SNR value of all subcarriers from the per-subcarrier SNR values.

An SNR variance calculation section 523 calculates SNR variance of all subcarriers from the per-subcarrier SNR values and average SNR value.

More specifically, the average SNR value and SNR variance are calculated as follows.

After converting per-subcarrier SNR values γ_{m,k} from dB values to true-value SNR values Γ_{m,k}, average SNR calculation section 522 calculates an average SNR value (true value) by averaging per-subcarrier SNR values (true values) Γ_{m,k} for all subcarriers in accordance with Equation (2) above. Average SNR calculation section 522 also similarly calculates a dB-value average SNR value.

SNR variance calculation section 523 converts per-subcarrier SNR values γ_{m,k} from dB values to true-value SNR values Γ_{m,k}, and calculates SNR variance (true value) by means of Equation (13) from SNR values Γ_{m,k} and the average SNR value (true value) calculated by average SNR calculation section 522. Furthermore, SNR variance calculation section 523 obtains dB-value SNR variance by linear-log conversion. $V \left({Γ}_{k}\right) = \frac{1}{M} {\sum }_{m = 1}^{M} ( {Γ}_{m , k} - E ( {Γ}_{k} ) {)}^{2}$

The following parameters may also be used instead of SNR variance as a parameter indicating the time variation amount of channel response.
- Instantaneous SNR average variation amount ${u}_{k} = \frac{1}{M} {\sum }_{m = 1}^{M} \left|{Γ}_{m , k}-E({Γ}_{k})\right|$
- Instantaneous SNR maximum variation amount ${v}_{k} = {max}_{1 \leq m \leq M} ‖ {Γ}_{m , k} - E ( {Γ}_{k} ) ‖$
- Square of instantaneous SNR maximum variation amount ${x}_{k} = {max}_{1 \leq m \leq M} ⁢ {‖ {Γ}_{m , k} - E ( {Γ}_{k} ) ‖}^{2}$
- Difference of instantaneous SNR maximum and minimum ${z}_{k} = \frac{1}{2} ⁢ \left|{max}_{1 \leq m \leq M}⁢{Γ}_{m , k}-{min}_{1 \leq m \leq M}⁢{Γ}_{m , k}\right|$
- Difference of square of instantaneous SNR maximum and square of instantaneous SNR minimum ${d}_{k} = {max}_{1 \leq m \leq M} | {Γ}_{m , k} ⁢ {|}^{2} - {min}_{1 \leq m \leq M} | {Γ}_{m , k} ⁢ {|}^{2}$

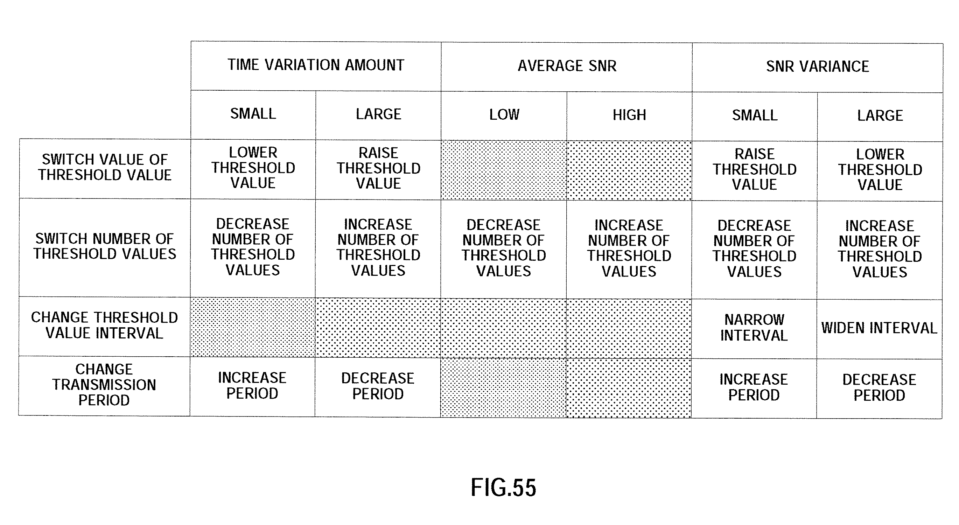

CSI processing section 38 and CSI transmission control section 39 control the values of threshold values, the number of threshold values, the threshold value interval, and the CSI frame transmission period, as shown in FIG.55, according to the time variation amount of channel response, average SNR value (dB value), and SNR value variance (dB value). A number of typical control examples are given below.

### <Control Example 1: Control of value of threshold value based on time variation amount of channel response>

When the time variation amount of channel response is large, overall subcarrier SNR time variation is also large. On the other hand, when the time variation amount of channel response is small, overall subcarrier SNR time variation is also small. Thus, in order to perform CSI frame assignment in line with the amount of time variation, CSI processing section 38 performs control so that the threshold value for an SNR value is raised when the time variation amount of channel response is large, and the threshold value for an SNR value is lowered when the time variation amount of channel response is small. By means of this control, it is possible to perform CSI frame assignment in line with the per-subcarrier channel time variation speed, enabling the amount of feedback data to be reduced without degrading reception performance.

### <Control Example 2: Control of number of threshold values based on average SNR value>

When the average SNR value is high, a robust modulation method can be applied even to a subcarrier with a low SNR value and communication on all subcarriers becomes possible, and therefore CSI processing section 38 increases the number of threshold values and the types of CSI frame. On the other hand, when the average SNR value is low, a subcarrier with a low SNR value is included in the noise region, and therefore CSI processing section 38 decreases the number of threshold values.

### <Control Example 3: Control of threshold value interval based on SNR variance>

When SNR variance is large, the possible range of subcarrier SNR values becomes wide. On the other hand, when SNR variance is small, the possible range of subcarrier SNR values becomes narrow. Thus, in order to adapt to this kind of variation in range, CSI processing section 38 widens the threshold value interval when SNR variance is large, and narrows the threshold value interval when SNR variance is small.

### <Control Example 4: Control of number of threshold values based on SNR variance>

When SNR variance is large, the possible range of subcarrier SNR values becomes wide. On the other hand, when SNR variance is small, the possible range of subcarrier SNR values becomes narrow. Thus, in order to adapt to this kind of variation in range, CSI processing section 38 increases the number of threshold values when SNR variance is large, and decreases the number of threshold values when SNR variance is small.

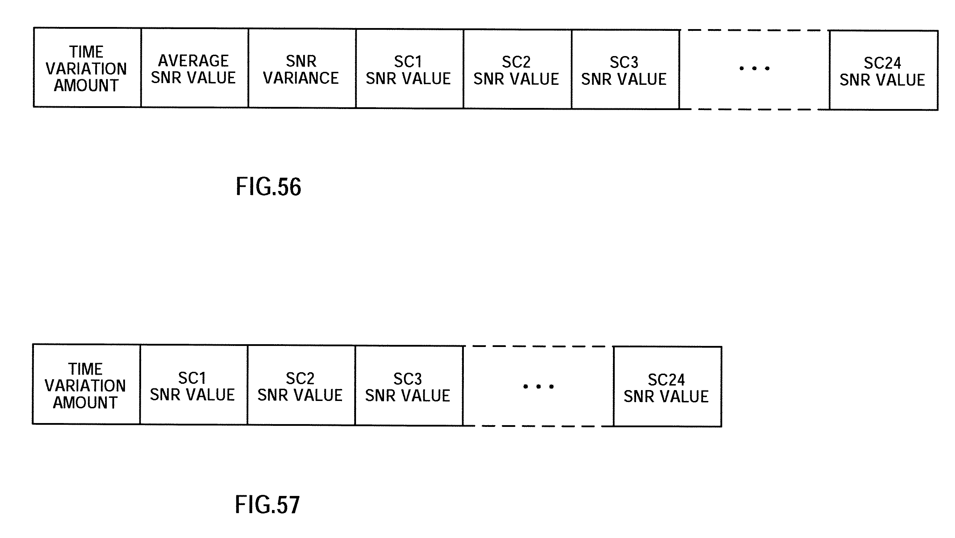

In order to share threshold value and transmission period settings between a CSI transmitting apparatus and CSI receiving apparatus, CSI processing section 38 and CSI frame generation section 386 use a frame format that includes the time variation amount of channel response, average SNR value, and SNR variance, as shown in FIG.56, instead of the frame format shown in FIG.9. Since time variation amount of channel response, average SNR value, and SNR variance are all fed back in this way, these items need not be calculated by the CSI receiving apparatus. Also, since it is possible for the average SNR value and SNR variance to be calculated by the CSI receiving apparatus from the SNR values of all subcarriers, CSI frame generation section 386 may use a frame format that does not include the average SNR value or SNR variance, as shown in FIG.57, instead of the frame format shown in FIG.9.

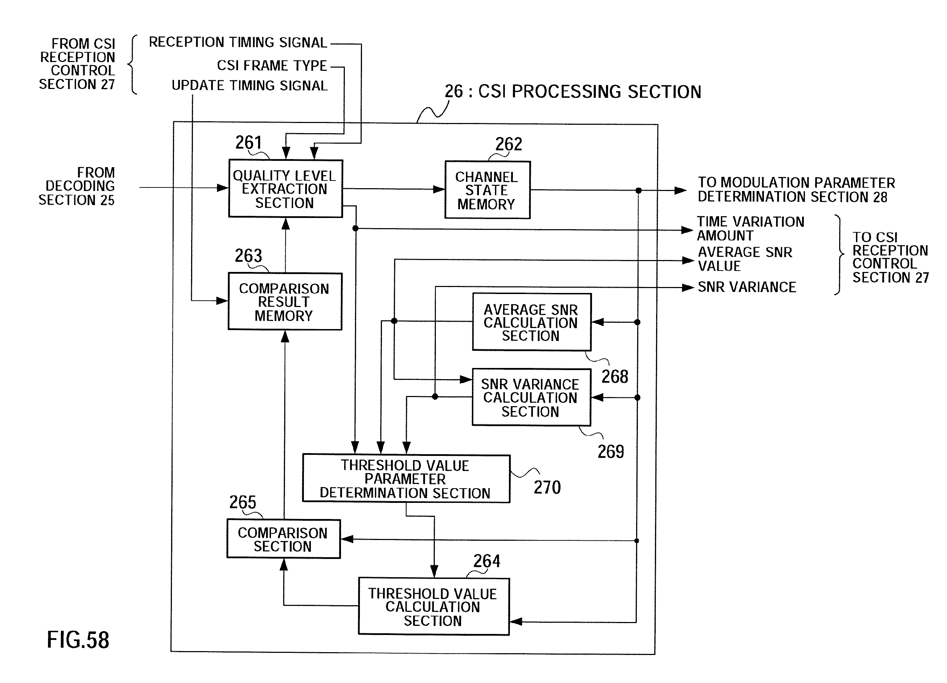

Next, the configuration of CSI processing section 26 according to this embodiment will be described using FIG.58. FIG.58 shows the configuration of CSI processing section 26 when the CSI transmitting apparatus uses the frame format shown in FIG.57. When the CSI transmitting apparatus uses the frame format shown in FIG.56, average SNR calculation section 268 and SNR variance calculation section 269 are not necessary. Configuration elements in FIG.58 identical to those in Embodiment 3 (FIG.26) are assigned the same codes as in FIG.26, and descriptions thereof are omitted.

Quality level extraction section 261 extracts per-subcarrier SNR values from a CSI frame, and outputs them to channel state memory 262 together with the subcarrier numbers. Also, quality level extraction section 261 extracts the time variation amount of channel response from the CSI frame, and outputs it to a threshold value parameter determination section 270.

Average SNR calculation section 268 calculates an average SNR value by means of the same kind of processing as used by average SNR calculation section 522 in FIG.54. Also, SNR variance calculation section 269 calculates SNR variance by means of the same kind of processing as used by SNR variance calculation section 523 in FIG.54.

Threshold value parameter determination section 270 generates the values of threshold values, number of threshold values, and threshold value interval based on the time variation amount of channel response, average SNR value, and SNR variance, in accordance with FIG.55, and outputs these to threshold value calculation section 264.

Then threshold value calculation section 264 calculates a threshold value in accordance with this control information.

By means of such operations in CSI processing section 26, the same threshold value (s) as used by a CSI transmitting apparatus can also be set by a CSI receiving apparatus.

Thus, in this embodiment, appropriate CSI frame assignment, appropriate CSI frame number setting, and appropriate feedback period setting are possible according to the time variation amount of channel response, average SNR value, and SNR variance, enabling the amount of data in feedback information to be reduced without degrading throughput performance optimally adjusted by means of adaptive control.

This concludes the description of embodiments of the present invention.

In the above embodiments, aconfigurationhasbeen described whereby the radio communication apparatus shown in FIG.2 transmits CSI, and the radio communication apparatus shown in FIG. 1 determines modulation parameters based on received CSI. However, it is also possible to use a configuration whereby the radio communication apparatus shown in FIG.2 transmits modulation parameters instead of CSI. That is to say, a configuration may be used whereby the radio communication apparatus shown in FIG.2 determines per-subcarrier (per-segment) modulation parameters based on quality level, and transmits modulation parameters in a similar way to the above-described CSI transmission, and the radio communication apparatus shown in FIG.1 performs coding, modulation, and transmission power control in accordance with received modulation parameters.

In the above embodiments, the description has assumed that there are two types of CSI frame, but a plurality of threshold values may also be set, and three or more CSI frame types used.

A segment may also be referred to as a resource block, subchannel, subcarrier block, subband, or chunk.

A radio communication terminal apparatus (mobile station) may be referred to as "UE, " a radio communication base station apparatus as "Node B," and a subcarrier as a "tone."

In the above embodiments, cases have been described by way of example in which the present invention is configured as hardware, but it is also possible for the present invention to be implemented by software.

The function blocks used in the descriptions of the above embodiments are typically implemented as LSIs, which are integrated circuits. These may be implemented individually as single chips, or a single chip may incorporate some or all of them.

Here, the term LSI has been used, but the terms IC, system LSI, super LSI, and ultra LSI may also be used according to differences in the degree of integration.

The method of implementing integrated circuitry is not limited to LSI, and implementation by means of dedicated circuitry or a general-purpose processor may also be used. An FPGA (Field Programmable Gate Array) for which programming is possible after LSI fabrication, or a reconfigurable processor allowing reconfiguration of circuit cell connections and settings within an LSI, may also be used.

In the event of the introduction of an integrated circuit implementation technology whereby LSI is replaced by a different technology as an advance in, or derivation from, semiconductor technology, integration of the function blocks may of course be performed using that technology. The adaptation of biotechnology or the like is also a possibility.

The present application is based on Japanese Patent Application No.2004-264606 filed on September 10, 2004, and Japanese Patent Application No.2005-246088 filed on August 26, 2005, entire content of which is expressly incorporated herein by reference.

### Industrial Applicability

The present invention is applicable to a radio communication base station apparatus and radio communication terminal apparatus used in a mobile communication system or the like.

## Claims

1. A radio communication apparatus comprising:
a receiving section that receives a multicarrier signal composed of a plurality of subcarriers;
a measuring section that measures a quality level per subcarrier or per segment of the multicarrier signal;
a comparison section that compares the quality level or an amount of variation of the quality level with a threshold value; and
a transmitting section that transmits CSI or modulation parameters of some subcarriers or some segments for which the quality level is less than the threshold value, or of some subcarriers or some segments for which the amount of variation exceeds the threshold value, using a first feedback period, and transmits CSI or modulation parameters of all subcarriers or all segments using a second feedback period greater than the first feedback period.

2. The radio communication apparatus according to claim 1, wherein the transmitting section transmits a comparison result of the comparison section as CSI.

3. The radio communication apparatus according to claim 1, further comprising a setting section that sets the threshold value using an average value or a median value of the quality levels of the plurality of subcarriers.

4. The radio communication apparatus according to claim 1, further comprising a generation section that generates a first frame composed of CSI or modulation parameters of a subcarrier or segment for which the quality level exceeds the threshold value, or of a subcarrier or segment for which the amount of variation is less than the threshold value, and generates a second frame composed of CSI or modulation parameters of a subcarrier or segment for which the quality level is less than the threshold value, or of a subcarrier or segment for which the amount of variation exceeds the threshold value,
wherein the transmitting section transmits the first frame using a feedback period that is an integral multiple of a feedback period of the second frame.

5. A radio communication terminal apparatus comprising the radio communication apparatus according to claim 1.

6. A radio communication base station apparatus comprising the radio communication apparatus according to claim 1.

7. A radio communication method comprising:
a receiving step of receiving a multicarrier signal composed of a plurality of subcarriers;
a measuring step of measuring a quality level per subcarrier or per segment of the multicarrier signal;
a comparison step of comparing the quality level or an amount of variation of the quality level with a threshold value; and
a transmitting step of transmitting CSI or modulation parameters of some subcarriers or some segments for which the quality level is less than the threshold value, or of some subcarriers or some segments for which the amount of variation exceeds the threshold value, using a first feedback period, and transmitting CSI or modulation parameters of all subcarriers or all segments using a second feedback period greater than the first feedback period.
